# EUROPEAN PATENT SPECIFICATION

(11) **EP 4 567 691 B1**
(45) Date of publication and mention of the grant of the patent: **04.11.2026**
(21) Application number: 23850422.9
(22) Date of filing: 02.08.2023
(51) Int. Cl.: G06Q 10/06, G06Q 10/10, H04L 9/00, G10L 15/26, G06F 40/20, G06N 20/00, G06N 3/08, G06Q 10/0637, G06Q 10/0639, G06Q 30/018, G06Q 50/10

(54) **DEVICE AND METHOD FOR SOFTWARE-BASED COMPANY ESG ADMINISTRATION MANAGEMENT**
VORRICHTUNG UND VERFAHREN ZUR VERWALTUNG DER VERWALTUNG EINER SOFTWAREBASIERTEN UNTERNEHMENS-ESG
DISPOSITIF ET PROCÉDÉ DE GESTION D'ADMINISTRATION D'ESG D'ENTREPRISE BASÉE SUR UN LOGICIEL

(30) Priority: 05.08.2022 KR 20220097983
(43) Date of publication of application: 11.06.2025
(73) Proprietor: I-ESG Inc., Seoul 06248 (KR)
(72) Inventor: KIM, Jong Woong, Seoul 06248 (KR)
(74) Representative: patcare Patentanwälte Partnerschaft mbB
(86) International application number: PCT/KR2023/011325
(87) International publication number: WO 2024/029922

(56) References cited:
- CN-A- 113 421 165
- CN-A- 114 139 539
- JP-A- 2018 109 936
- JP-A- 2021 009 696
- JP-A- 2021 009 696
- KR-B1- 102 535 522
- US-A1- 2021 365 486
- YOOK KEUN-HYO: "Materiality Analysis in Sustainability(Environment) Report : Based on Four Case Studies", JOURNAL OF ENVIRONMENTAL POLICY, vol. 11, no. 1, 30 March 2012 (2012-03-30), pages 49 - 74, XP093135404, ISSN: 1598-7582, DOI: 10.17330/joep.11.1.201203.49

## Description

### [Technical Field]

The present disclosure relates to a corporate ESG (Environment, Social, Governance) management device using ESG software and its implementation method. Specifically, this invention relates to the operation of ESG field online services, which use digital solutions to help companies diagnose their ESG status, establish efficient strategies through benchmarking analysis, respond externally through ESG report creation that meets global standards, promote more transparent and secure ESG report distribution utilizing blockchain technology, and support continuous ESG management through feedback from comparisons with benchmark groups using AI technology.

### [Background Art]

Recently, with the advancement of information and communication technology, cloud-based software (Software as a Service, SaaS) has been rapidly increasing. In particular, B2B solution services utilizing big data and artificial intelligence based on the strengths of SaaS, such as user convenience and security, are gaining popularity.

Meanwhile, ESG, which refers to a company's non-financial performance and efforts, is receiving significant attention due to climate change and the COVID-19 crisis, and domestic companies are facing increasing pressure to respond due to rapid regulation and formalization at the global level. However, due to the absence of ESG field specialists and services, managers are currently carrying out numerous tasks related to ESG analysis, response, and reporting manually. Additionally, as the ESG market is still in its infancy, relevant standards and regulations are continuously being updated, making it difficult for companies to respond immediately and efficiently.

Accordingly, the need for digital innovation in ESG management has emerged, and efforts to converge digital technology with this field are being attempted, primarily in advanced countries overseas. Notably, ESG-related services that identify rapidly changing ESG trends using big data and AI technology and recommend benchmarking cases suitable for the user company are being released.

However, comprehensive online software for ESG using these latest technologies is significantly lacking not only domestically but also globally, and even released services are limited to specific functions such as ESG diagnosis or report automation, resulting in low utilization. Furthermore, ESG services are primarily provided to rating agencies and investment companies, focusing on ESG evaluation of listed companies and investment information based on this, while services for companies to respond to ESG are very rare.

Considering that most companies have not yet internalized ESG management, there is a need for a comprehensive ESG online service that can manage everything from ESG education and diagnosis to internal and external disclosure at once.

JP°2021 009696 A discloses a system, method and program for supporting ESG management. The system comprises a visualization and analysis unit for processing ESG and financial data into a specific expression format and analyzes correlations.

US°2021/365486 A discloses a device that collects news articles on the Internet, performs natural language processing (NLP), and calculates ESG risks based on clusters.

### [Disclosure]

### [Technical Problem]

The present disclosure may provide an ESG diagnostic system that helps companies respond flexibly and efficiently to ESG management requirements by conducting ESG diagnostic evaluations of client companies and providing comparative information with other companies of similar industry and size, thereby helping to assess relative ESG levels and establish future strategies.

Additionally, the present disclosure allows easy sharing of ESG diagnostic results with stakeholders such as executives, partners, and customers by providing the results in formats like PDF.

Furthermore, the present disclosure enables materiality assessments through communication with stakeholders within the service, allowing for the most efficient selection and management of important issues.

The present disclosure also recommends disclosure standards that best match the company's characteristics, facilitates reporting preparation and distribution accordingly, making it easier to respond to internal and external ESG requirements.

Moreover, the present disclosure distributes and modifies ESG reports using a blockchain network, and when finalizing distributed ESG reports, prevents further modifications and changes to provide reliable reports to ESG evaluators while ensuring information security by allowing only authenticated users to access sensitive company information.

Additionally, the present disclosure supports easy understanding of a company's ESG management status and continuous improvement by providing in a single management screen the company's ESG management history, comparative analysis and improvement feedback with benchmark groups using AI technology, and relevant global trend information based on the information prepared by the company.

The effects of the present disclosure are not limited to those mentioned above, and other effects not mentioned will be clearly understood by those skilled in the art from the following description.

### [Technical Solution]

One aspect of the present disclosure provides provide a device for supporting ESG (Environment, Social, Governance) management, wherein the device includes: an ESG diagnosis module that generates ESG diagnosis results for a target company based on multiple ESG evaluation items including Environmental evaluation items, Social evaluation items, Governance evaluation items, and general evaluation items; a materiality topic selection module that selects materiality topics corresponding to the target company from among ESG topics included in an ESG topic pool; an ESG report generation module that generates an ESG report based on the ESG diagnosis results and responses to the materiality topics; and an ESG management support module that provides an ESG management screen including at least one of the ESG diagnosis results, the materiality topics, and the ESG report.

In one embodiment, the ESG diagnosis module may configure ESG evaluation items that are selected based on frequency and continuously updated from evaluation items included in an ESG evaluation item pool.

In one embodiment, the device may further include an ESG supply chain management module that stores information on supply chain companies managed by the target company and configures the ESG evaluation items by selecting one or more from evaluation items corresponding to the supply chain companies.

In one embodiment, the ESG diagnosis module may set evaluation item weights for each evaluation item corresponding to the supply chain companies and generate ESG diagnosis results for the supply chain companies by reflecting the evaluation item weights.

In one embodiment, the ESG report generation module may generate the ESG report including at least one of an ESG comprehensive diagnosis score, ESG category-specific diagnosis scores, ESG diagnosis feedback based on the ESG diagnosis results, ESG diagnosis score history, or benchmark company comparison information.

In one embodiment, the materiality topic selection module may collect priority survey results for the ESG topics from pre-registered stakeholders and select the materiality topics based on the priority survey results and the report writer's priority input for the ESG topics.

In one embodiment, the materiality topic selection module may provide topics pre-selected by the report writer from among the ESG topics to the pre-registered stakeholders and collect the priority survey results for the selected topics from the stakeholders.

In one embodiment, the ESG report generation module may generate the ESG report including an importance comparison diagram that compares the priority input and the priority survey results.

In one embodiment, the device may further include a disclosure standard recommendation module that recommends disclosure standards corresponding to the target company based on at least one of the target company's industry group, company size, main market, disclosure target, or disclosure purpose, and the ESG report generation module may generate the ESG report based on the recommended disclosure standards or disclosure standards selected by the report writer.

In one embodiment, the disclosure standard recommendation module may recommend the disclosure standards by reflecting higher importance on the disclosure target and the disclosure purpose than on the importance of the industry group, the company size, and the main market.

In one embodiment, the device may further include an ESG report distribution module that publishes the ESG report through at least one of a public blockchain or a private blockchain.

In one embodiment, the ESG report generation module may generate a public ESG report by excluding sensitive information from the ESG report, and the ESG report distribution module may distribute the public ESG report through a private blockchain that only authorized users may participate in.

In one embodiment, the ESG report distribution module may provide the ESG report corresponding to the public ESG report when a hash corresponding to the public ESG report is input.

Various embodiments of the present disclosure may provide a method for supporting ESG (Environment, Social, Governance) management, wherein the method includes: generating ESG diagnosis results for a target company based on multiple ESG evaluation items including Environmental evaluation items, Social evaluation items, Governance evaluation items, and general evaluation items; selecting materiality topics corresponding to the target company from among ESG topics included in an ESG topic pool; generating an ESG report based on the ESG diagnosis results and responses to the materiality topics; and providing an ESG management screen including at least one of the ESG diagnosis results, the materiality topics, or the ESG report.

### [Advantageous Effects]

The present disclosure aims to achieve the following objectives to solve the aforementioned problems:
The present disclosure aims to diagnose companies' ESG status, identify and analyze important issues within ESG, and generate ESG reports.

Additionally, the present disclosure aims to securely distribute generated ESG reports using blockchain technology.

Furthermore, it aims to continuously support companies' ESG management through comparative analysis with benchmark groups and improvement feedback utilizing AI technology.

The objectives of the present disclosure are not limited to those mentioned above, and other objectives not mentioned will be clearly understood by those skilled in the art from the following description.

### [Description of Drawings]

FIG. 1 is a block diagram illustrating a system for generating an ESG report according to various embodiments of the present disclosure.
FIG. 2 is a block diagram illustrating the configuration of an electronic device according to various embodiments of the present disclosure.
FIG. 3 is an operational flow diagram illustrating a method for performing ESG diagnosis, materiality topic selection, report preparation, distribution, and management according to various embodiments of the present disclosure.
FIG. 4 is a block diagram illustrating an ESG diagnosis system according to various embodiments of the present disclosure.
FIG. 5 is an operational flow diagram illustrating an embodiment of the step (S301) of generating ESG diagnosis results shown in FIG. 3.
FIGS. 6 to 9 are diagrams illustrating examples of ESG diagnostic items and corresponding diagnostic feedback according to various embodiments of the present disclosure.

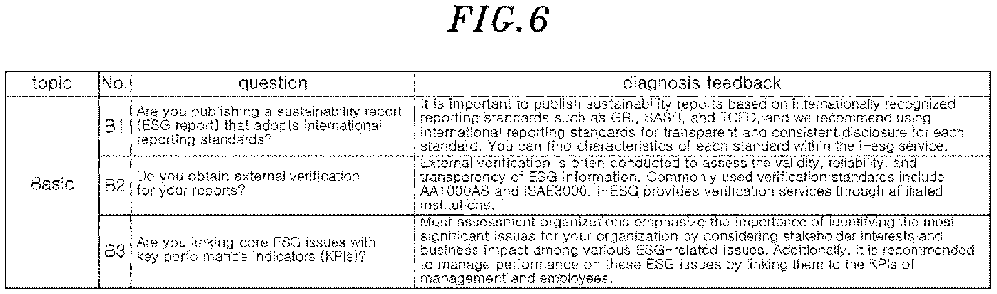

FIG. 6 is a diagram showing examples of ESG diagnostic items classified under the topic "Basic" and their corresponding diagnostic feedbacks according to various embodiments of the present disclosure.

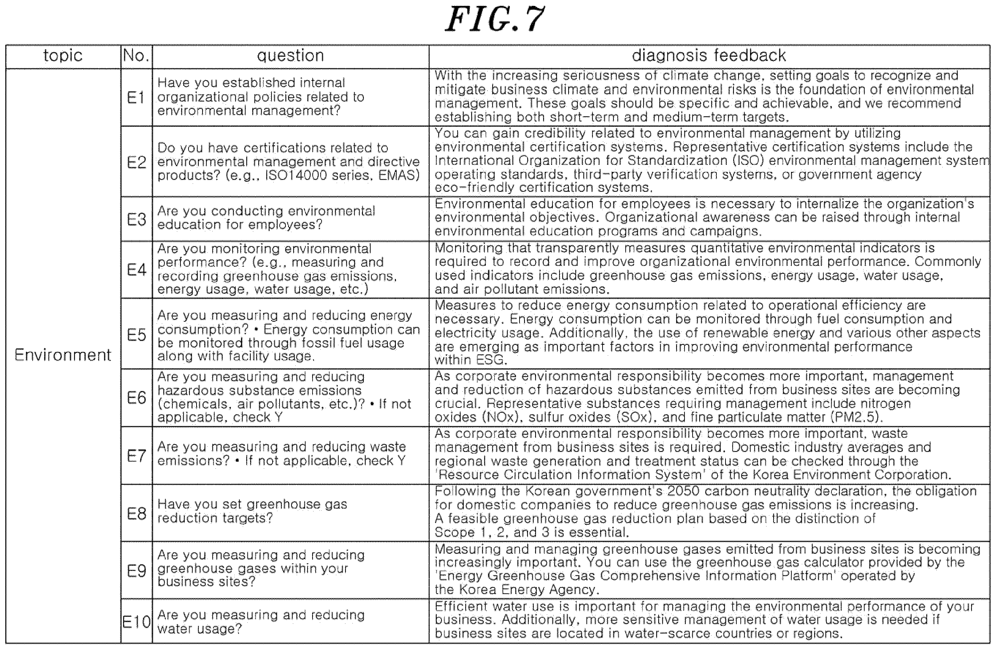

FIG. 7 is a diagram showing examples of ESG diagnostic items classified under the topic "Environment" and their corresponding diagnostic feedbacks according to various embodiments of the present disclosure.

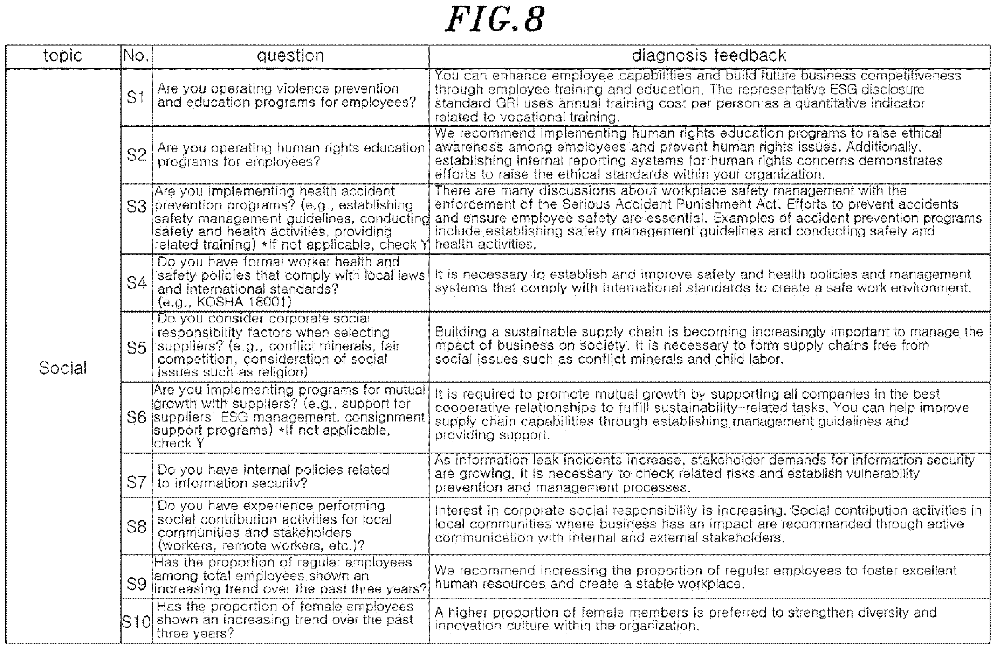

FIG. 8 is a diagram showing examples of ESG diagnostic items classified under the topic "Social" and their corresponding diagnostic feedbacks according to various embodiments of the present disclosure.

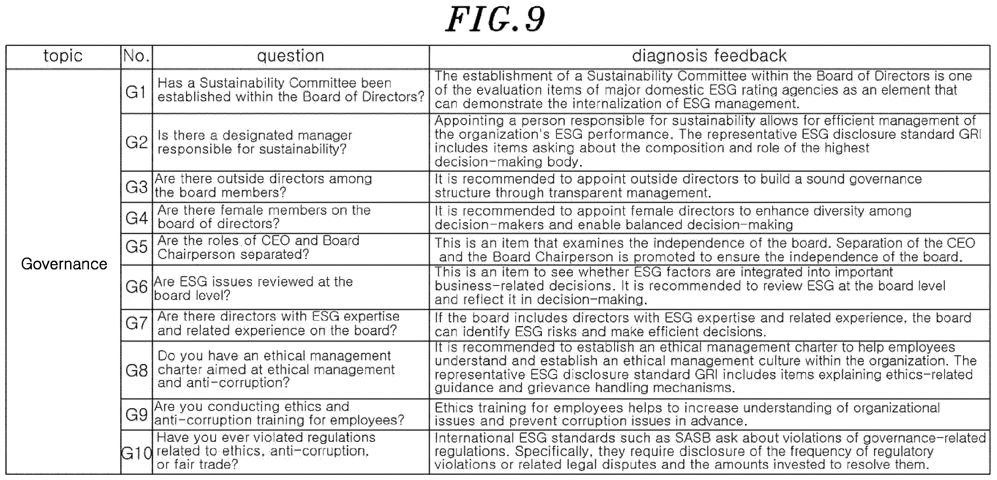

FIG. 9 is a diagram showing examples of ESG diagnostic items classified under the topic "Governance" and their corresponding diagnostic feedbacks according to various embodiments of the present disclosure.

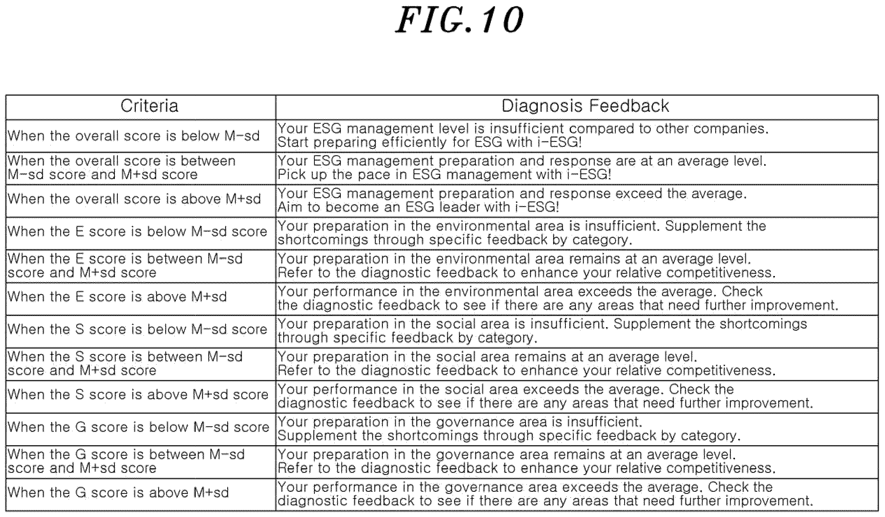

FIG. 10 is a diagram illustrating an example of ESG diagnostic feedback according to various embodiments of the present disclosure.

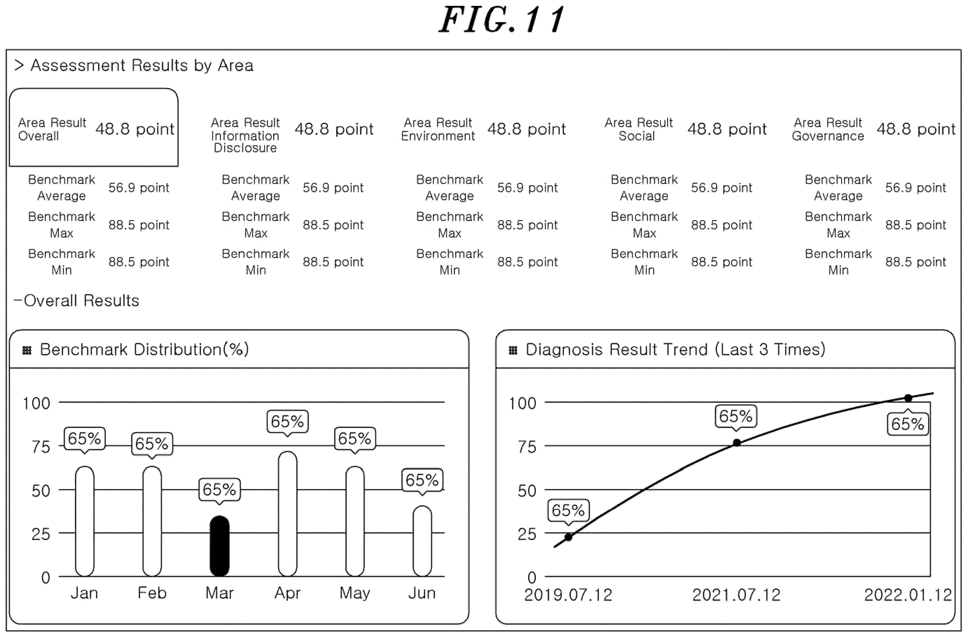

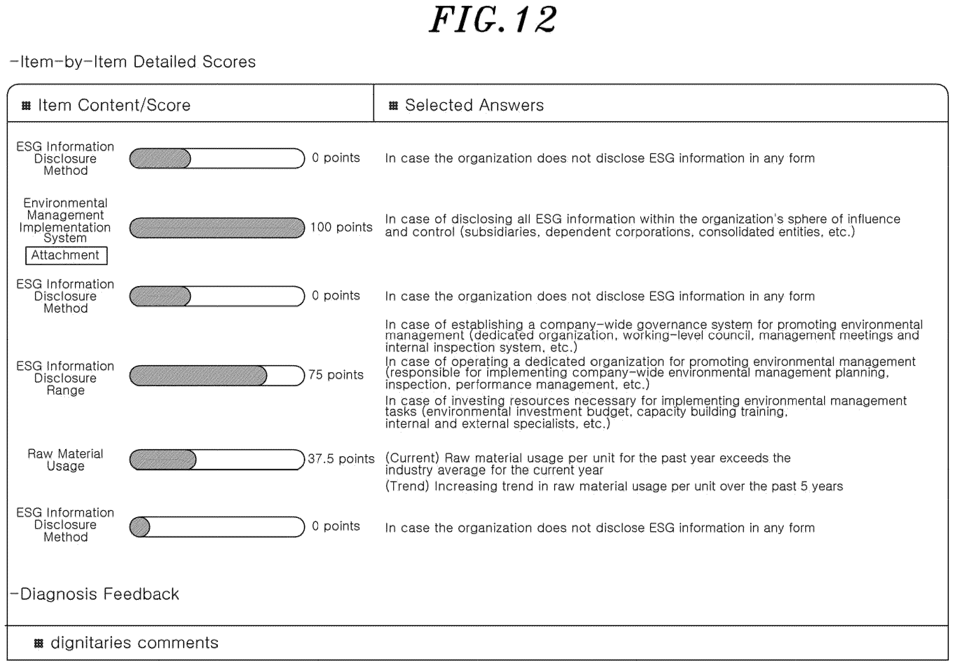

FIGS. 11 and 12 are diagrams illustrating examples of ESG diagnosis results according to various embodiments of the present disclosure.
FIG. 11 is a diagram displaying the assessment results by area calculated as diagnostic results of the target company according to various embodiments of the present disclosure.
FIG. 12 is a diagram displaying the detailed scores by item as diagnostic results of the target company according to various embodiments of the present disclosure.

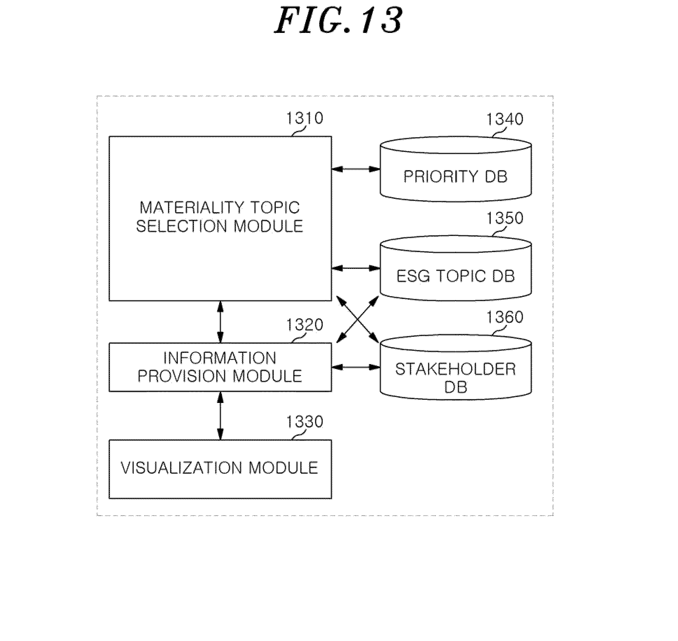

FIG. 13 is a block diagram illustrating a materiality topic selection system according to various embodiments of the present disclosure.

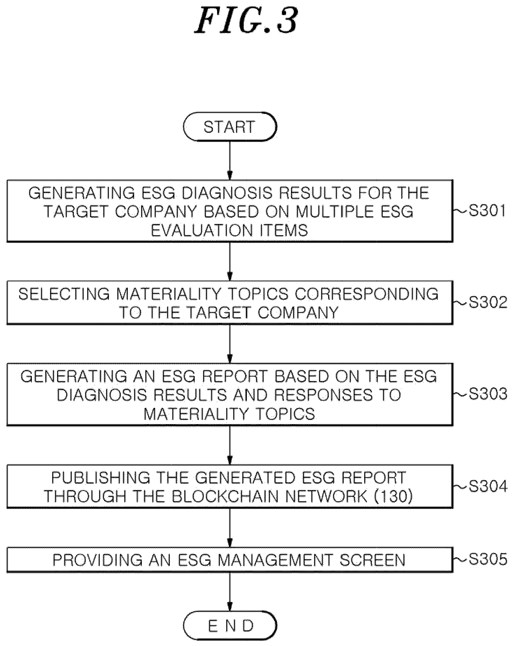

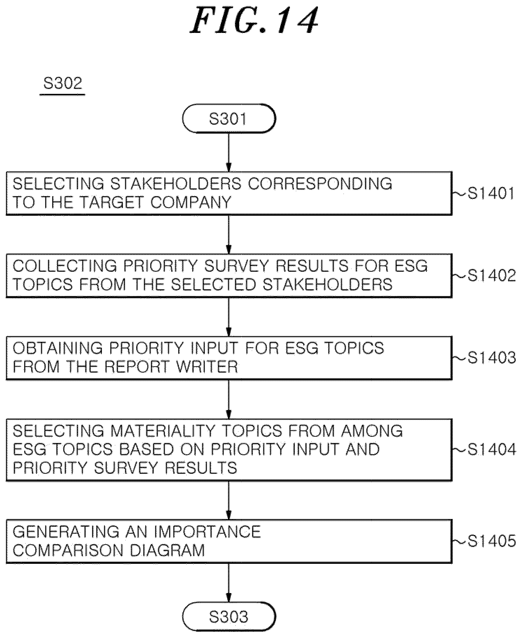

FIG. 14 is an operational flow diagram illustrating an embodiment of the step (S302) of selecting materiality topics shown in FIG. 3.

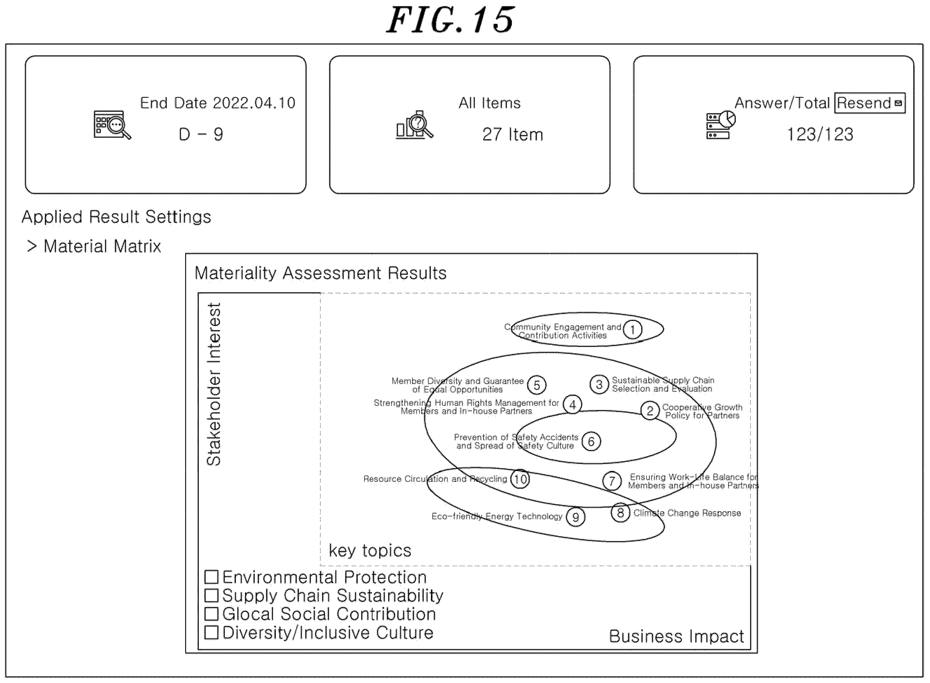

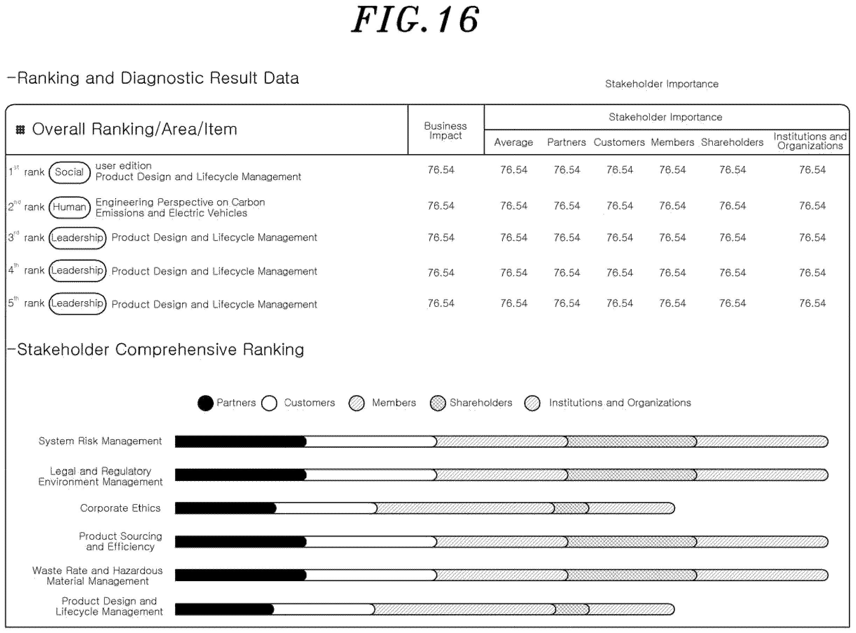

FIGS. 15 and 16 are diagrams illustrating examples of materiality topic selection results according to various embodiments of the present disclosure.
FIG. 15 is a diagram displaying the comparative results of the materiality assessment based on materiality topics selected by stakeholders according to various embodiments of the present disclosure.
FIG. 16 is a diagram displaying the priority survey results of ESG items according to the materiality topics selected by stakeholders according to various embodiments of the present disclosure.

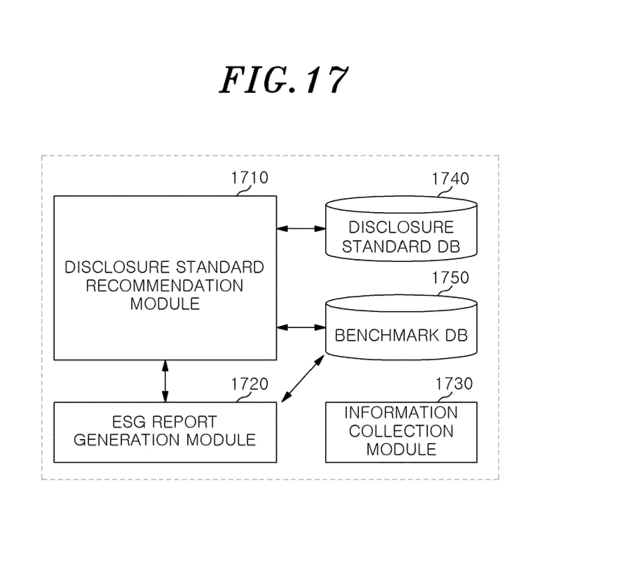

FIG. 17 is a block diagram illustrating an ESG report generation system according to various embodiments of the present disclosure.

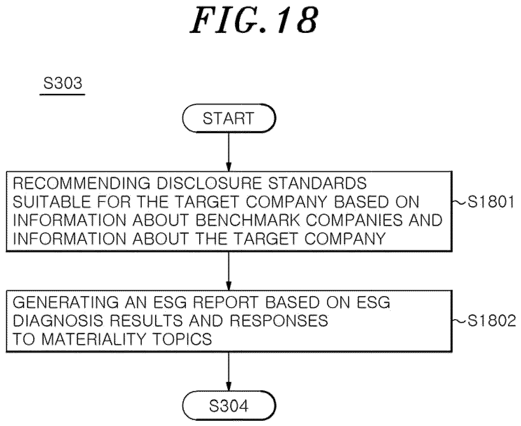

FIG. 18 is an operational flow diagram illustrating an embodiment of the step (S303) of generating an ESG report shown in FIG. 3.

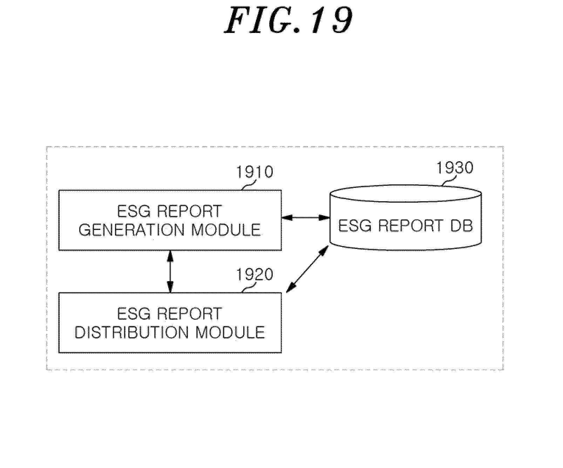

FIG. 19 is a block diagram illustrating an ESG report distribution system according to various embodiments of the present disclosure.

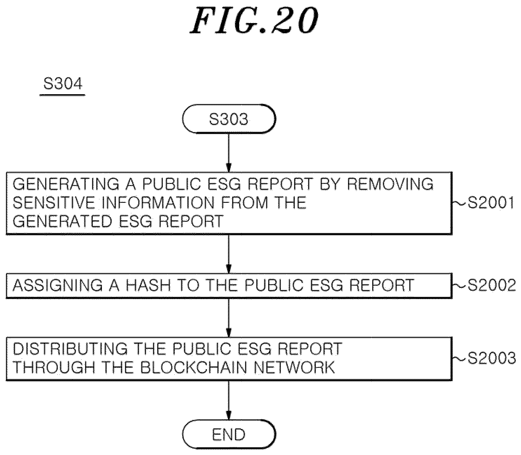

FIG. 20 is an operational flow diagram illustrating an embodiment of the step (S304) of distributing an ESG report shown in FIG. 3.

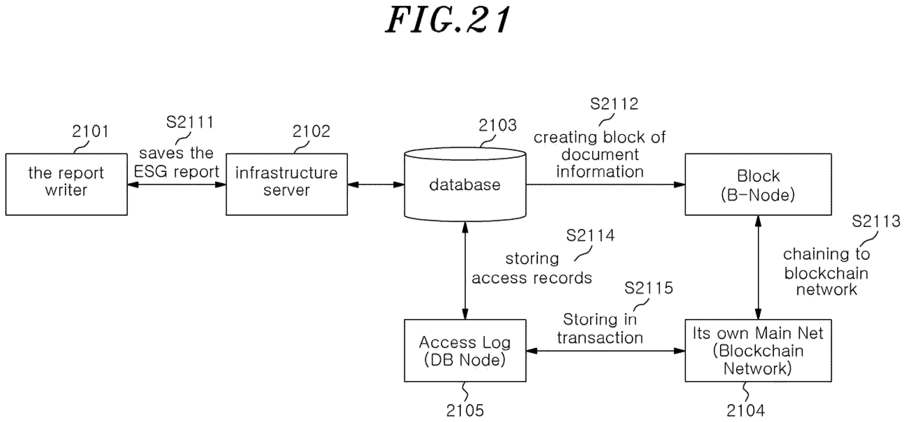

FIG. 21 is a diagram illustrating the process of distributing an ESG report according to various embodiments of the present disclosure.

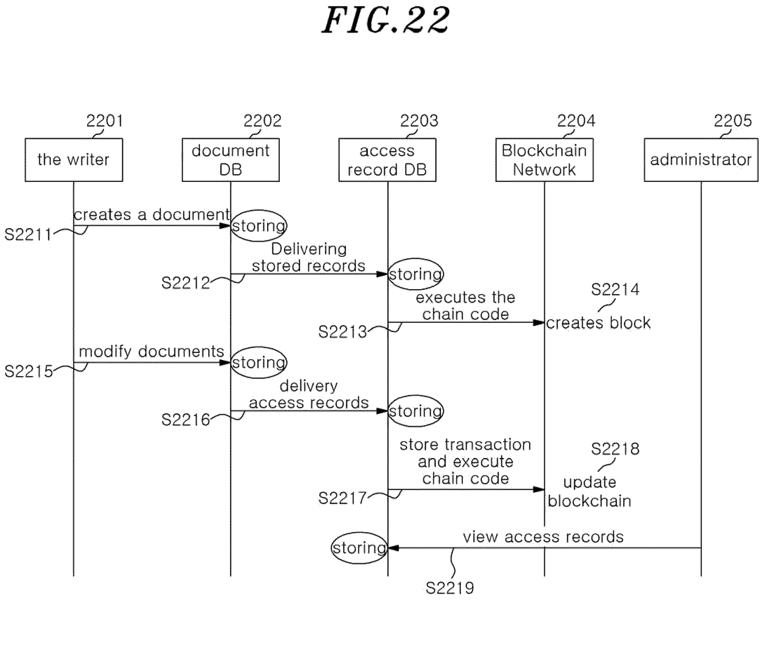

FIG. 22 is a diagram illustrating the process of distributing an ESG report to a blockchain network according to various embodiments of the present disclosure.

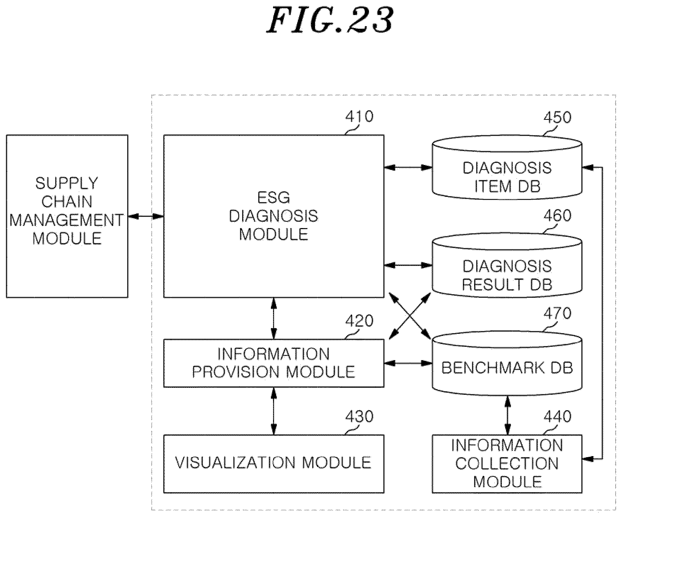

FIG. 23 is a block diagram including a supply chain management module according to various embodiments of the present disclosure.

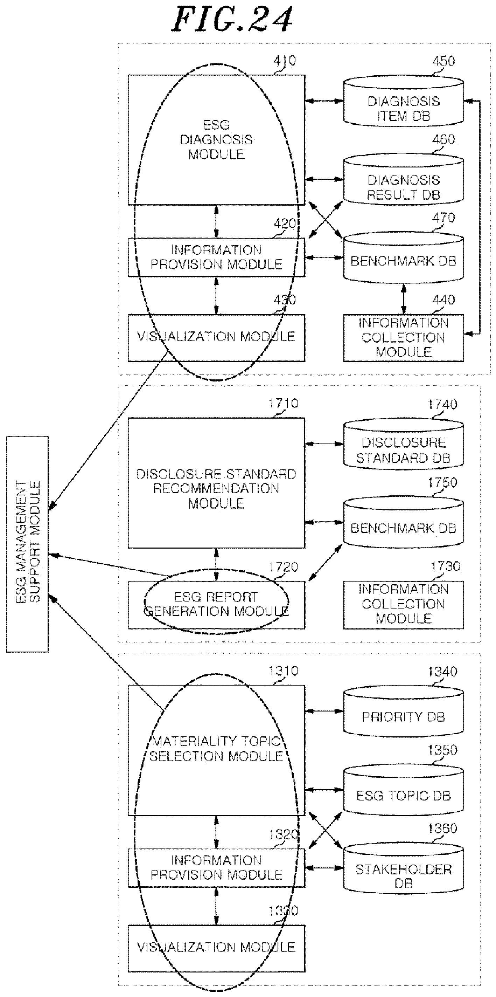

FIG. 24 is a block diagram including a management support module according to various embodiments of the present disclosure.

### [Best Modes of the Invention]

Hereinafter, the embodiment of the present disclosure will be described in detail with reference to the accompanying drawings so that those skilled in the art to which the present disclosure pertains can easily implement it. The present disclosure may be implemented in various different forms and is not limited to the embodiments described herein.

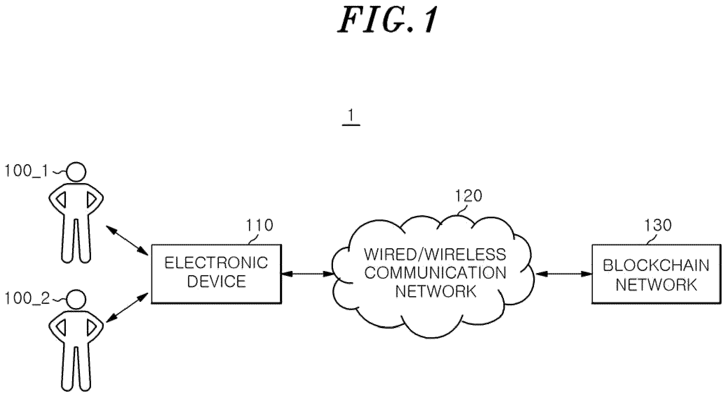

FIG. 1 is a block diagram illustrating a system (1) for generating an ESG report according to various embodiments of the present disclosure.

Referring to FIG. 1, the system (1) for generating an ESG report according to various embodiments of the present disclosure may include an electronic device (110), a wired/wireless communication network (120), and a blockchain network (130).

The administrator (100_1) and the user (100_2) refer to individuals who create (generate), modify, and distribute ESG reports for target companies using the electronic device (110), and may be called report writers. The administrator (100_1) has the authority to view access records for generated ESG reports and finalize them to restrict modifications, whereas the user (100_2) may refer to individuals who do not have such authority.

The target company may refer not only to companies but also comprehensively to various types of organizations such as institutions.

The electronic device (110) may refer to a terminal device that performs operations for creating, modifying, deleting, and distributing ESG reports through inputs from the report writer.

The electronic device (110) may generate ESG reports according to the report writer's input and distribute the generated ESG reports to the blockchain network (130) through the wireless communication network (120). Additionally, the electronic device (110) may retrieve, modify, and delete ESG reports distributed on the blockchain network (130) based on the report writer's input.

The electronic device (110) may be an electronic device that includes memory capable of storing information, a transceiver capable of transmitting and receiving information, and at least one processor capable of processing information, such as personal computers, cellular phones, smartphones, and tablet computers.

The electronic device (110) may also be implemented as a server accessible from other terminals, and in this case, the report writer may communicate with the electronic device (110) through a terminal (not shown) to create, modify, delete, and distribute ESG reports.

The wired/wireless communication network (120) may provide a communication path through which the electronic device (110) and the blockchain network (130) can transmit and receive signals and data to and from each other. The wired/wireless communication network (120) is not limited to a specific communication protocol and may use appropriate communication methods depending on the implementation. For example, if configured as an Internet Protocol (IP) based system, the wired/wireless communication network (120) may be implemented as a wired/wireless internet network, and if the electronic device (110) is implemented as a mobile communication terminal, the wired/wireless communication network (120) may be implemented as a wireless network such as a cellular network or a Wireless Local Area Network (WLAN).

The blockchain network (130) refers to a network that records transactions for the distribution, modification, or deletion of ESG reports, and may be configured with at least one combination of public blockchain, private blockchain, or hybrid blockchain.

In one embodiment, the blockchain network (130) may consist of a public blockchain where all users can access public ESG reports excluding sensitive information, and a private blockchain where only authorized users can access ESG reports containing all content. In another embodiment, the blockchain network (130) may be configured as a private blockchain where all users can access public ESG reports excluding sensitive information. For example, the blockchain network (130) may be a Hyperledger Fabric blockchain where only authorized users can participate.

Meanwhile, for open/public/non-permissioned system implementation, a DID (Decentralized Digital Credential) for companies or report writers wishing to issue ESG reports can be created through a Layer 2 solution linked to Bitcoin mainnet, a representative public blockchain. Using this DID solution, tasks such as identity verification of ESG report creation requesters, report issuance, and re-certification can be performed on the Bitcoin mainnet on-chain.

Through this, individual companies or report writers may have ownership and control over their identity information through the highly trusted Bitcoin network. When the electronic device (110) is requested to create an ESG report by a company authenticated with a DID, it may generate an ESG report based on the input of a report writer authenticated with a DID, distribute it to the blockchain network (130), and modify or delete ESG reports distributed on the blockchain network (130).

Meanwhile, ESG reports themselves may be distributed on the blockchain network or in de-identified data form (e.g., hash values of ESG report files, hash values of QR codes linked to ESG reports, etc.). More specifically, by processing DID operations in Bitcoin Layer 2 solutions (e.g., Lightning Network, Ion) while having each consensus take place on the Bitcoin network, it becomes possible to secure transaction processing volume (TPS) usable at the enterprise level while utilizing Bitcoin's neutral and highly trusted network without separate consensus nodes or consensus mechanisms.

In other words, this ESG solution may secure reliability by including separate consortium nodes according to the requirements of each country/specific industry stakeholders(or concerned person)/individual companies, similar to private/hybrid blockchains. However, if global standard ESG criteria are established, high reliability can be secured using the Bitcoin mainnet without concerns about consortium node configuration.

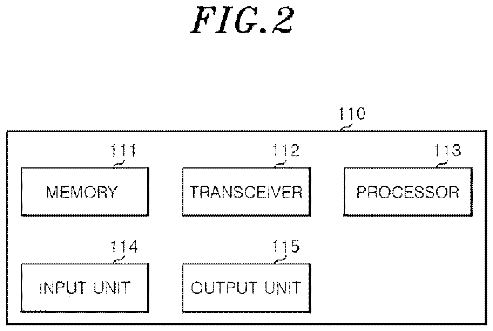

FIG. 2 is a block diagram illustrating the configuration of an electronic device (110) according to various embodiments of the present disclosure.

Referring to FIG. 2, the electronic device (110) according to various embodiments of the present disclosure includes at least one of a memory (111), a transceiver (112), a processor (113), an input unit (114), and an output unit (115).

Further, The electronic device (110) may generate ESG reports based on the report writer's input, distribute them to the blockchain network (130), and modify or delete ESG reports distributed on the blockchain network (130).

The memory (111) may refer to various storage devices that store data permanently, semi-permanently, or temporarily. For example, the memory (111) may include a Hard Disk Drive (HDD), Solid State Drive (SSD), Compact Disc (CD), Random Access Memory (RAM), Read Only Memory (ROM), etc.

The memory (111) may be connected to the processor (113) and store data such as basic programs for the processor's operation, applications, configuration information, and information generated by the processor's calculations. The memory (111) may consist of volatile memory, non-volatile memory, or a combination of volatile and non-volatile memory. The memory (111) may provide stored data according to the processor's request.

The memory (111) may permanently or temporarily store data received by the transceiver (112), data generated by cameras and recording devices, and data generated or processed by the processor (113). For example, the memory (111) may store recommended content received through the transceiver (112), video data generated by cameras, voice data generated by recording devices, and calculation data generated by the processor (113).

The memory (111) may temporarily or permanently store ESG evaluation item pools, ESG topic pools, ESG diagnosis results, corporate/company ESG disclosure information, diagnosis results, corporate financial information, ESG disclosure standards, and generated ESG reports. The ESG evaluation item pool may include environmental evaluation items, social evaluation items, governance evaluation items, and general evaluation items. The ESG topic pool may include ESG topics that can be selected as materiality topics.

General evaluation items may refer to items for general evaluation of the assessed company that do not belong to the environmental, social, or governance categories.

The transceiver (112) is connected to the processor (113) to transmit and receive data, and may transmit and receive data with external devices such as other electronic devices (110) or servers (130). All or part of the transceiver (113) may be referred to as a transmitter, receiver, transceiver, communication unit, communication model, or communication circuit. The transceiver (112) may support at least one of various wireless communication standards including wired connection systems and wireless connection systems such as IEEE (Institute of Electrical and Electronics Engineers) 802.xx systems, IEEE Wi-Fi systems, 3GPP (3rd Generation Partnership Project) systems, 3GPP LTE (Long Term Evolution) systems, 3GPP 5G NR (New Radio) systems, 3GPP2 systems, and Bluetooth.

The processor (113) may be configured to implement the procedures and/or methods proposed in this invention. The processor (113) may control the components of the electronic device (110) to perform determined operations. For this purpose, the processor (113) may request, search, receive, or utilize data from the memory (111), and control the components of the electronic device (110) to execute predicted operations or operations deemed desirable among at least one executable operation.

If coordination with external devices such as servers is necessary to perform the determined operation, the processor (113) may generate control signals to control the external device and transmit the generated control signals to the external device through the communication unit (111).

The processor (113) may acquire intent information for user inputs and determine the user's (100) requirements based on the acquired intent information. For example, the processor (113) may acquire intent information corresponding to user input using at least one of a Speech-To-Text (STT) engine for converting voice input into text strings or a Natural Language Processing (NLP) engine for acquiring intent information from natural language. At least part of the STT engine or NLP engine may be composed of artificial neural networks trained according to machine learning algorithms.

The processor (113) may consist of multiple processors and may also include neuromorphic processors designed to be advantageous for artificial neural network calculations by modeling the neurons and synapses of the human brain.

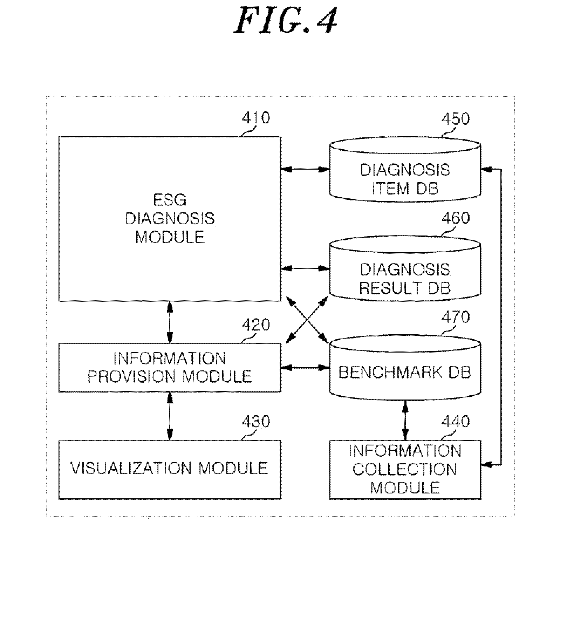

The processor (113) may generate ESG diagnosis results for the target company based on multiple ESG evaluation items through the ESG diagnosis module (refer to 410 in FIG. 4), select materiality topics corresponding to the target company from among ESG topics included in the ESG topic pool through the materiality topic selection module (refer to 1310 in FIG. 13), generate ESG reports based on ESG diagnosis results and responses to materiality topics through the ESG report generation module (refer to 1720 in FIG. 17 and 1910 in FIG. 19), distribute generated ESG reports to the blockchain network (130) through the ESG report distribution module (refer to 1920 in FIG. 19), support ESG management by providing an ESG management screen including ESG data (ESG diagnosis results, materiality topics, ESG reports, etc.) through the ESG management support module (refer to FIG. 24), and store information and ESG reports of supply chain companies managed by the target company and configure ESG evaluation items by selecting from evaluation items corresponding to supply chain companies through the ESG supply chain management module (refer to FIG. 23). The ESG reports of supply chain companies may include the supply chain company's comprehensive ESG diagnosis score, ESG category-specific diagnosis scores, ESG diagnosis feedback based on ESG diagnosis results, ESG diagnosis score history, benchmark company distribution, etc.

The ESG diagnosis module (refer to 410 in FIG. 4), materiality topic selection module (refer to 1310 in FIG. 13), ESG report generation module (refer to 1720 in FIG. 17 and 1910 in FIG. 19), ESG report distribution module (refer to 1920 in FIG. 19), ESG management support module, and ESG supply chain management module may refer to components from a software perspective that are functionally implemented according to the operation of hardware such as the processor (113).

I'll translate the text fully without omissions or improper mergers. If anything is unclear, I'll ask you about it.

The input unit (114) may include at least one of an input interface, camera, or recording device. The input interface may include a keyboard, mouse, joystick, etc. The camera may process image frames such as still images or videos obtained by an image sensor. The camera may consist of one or multiple cameras. The processed image frames may be displayed on the display of the output unit (115), transmitted to an external device through the transceiver (112), processed by the processor (113), or stored in the memory (111). The recording device may receive sound waves and convert them into electrical voice data, and the recording device may refer to a microphone. The converted voice data may be utilized in various ways depending on the function (or application) being performed on the electronic device (110). Meanwhile, various noise removal algorithms may be applied to the microphone (122) to remove noise during the process of receiving external sound waves.

The output unit (115) may include one or more of a display or speaker. The output unit (115) may output content according to the control of the processor (113). The display may visually present information processed in the electronic device (110). For example, the display may show execution screen information of applications running on the electronic device (100), or UI (User Interface) and GUI (Graphic User Interface) information according to such execution screen information. The display may be implemented as a touch screen by forming a mutual layer structure with a touch sensor or being integrated with it, thereby simultaneously providing both input and output interfaces. The speaker may output audio data processed in the electronic device (110) as sound waves.

FIG. 3 is an operational flow diagram illustrating a method for performing ESG diagnosis, materiality topic selection, report preparation, distribution, and management according to various embodiments of the present disclosure.

Referring to FIG. 3, at step S301, the processor (113) of the electronic device (110) generates ESG diagnosis results for the target company based on multiple ESG evaluation items including environmental evaluation items, social evaluation items, governance evaluation items, and general evaluation items.

The ESG evaluation items consist of questions that can be answered with either yes or no, allowing for easy calculation of scores based on the yes/no answers of the report writer who wishes to generate an ESG report.

The ESG diagnosis results include ESG diagnosis scores, which may include at least one of environmental scores, social scores, governance scores, information disclosure scores, or comprehensive diagnosis scores. Additionally, the ESG diagnosis results may include an ESG diagnosis score history based on the target company's past ESG diagnosis scores, and benchmark company comparison information through comparison with companies in the same/similar industries as the target company or all companies (hereinafter, benchmark companies). The ESG diagnosis results may also include detailed category score information, ESG diagnosis feedback, etc.

At step S302, the processor (113) of the electronic device (110) selects materiality topics corresponding to the target company from among ESG topics included in the ESG topic pool.

Materiality topics refer to topics considered important in the target company's ESG management from among a wide range of ESG topics, and may include topics that have a significant impact on the target company's management or topics recognized as important to the target company's stakeholders. Materiality topics enable companies to establish and implement effective ESG strategies.

The processor (113) may select materiality topics based on at least one of the report writer's priority input or priority survey/interview results from the target company's stakeholders (not shown).

At step S303, the processor (113) of the electronic device (110) generates an ESG report based on the ESG diagnosis results and responses to materiality topics.

The processor (113) may generate an ESG report based on one selected ESG preparation standard.

At step S304, the processor (113) of the electronic device (110) may publish (distribute) the generated ESG report through the blockchain network (130).

At step S305, the processor (113) of the electronic device (110) may provide an ESG management screen that allows companies to easily understand and continuously manage/improve ESG-related information by utilizing ESG data collected/stored in the memory (111).

The ESG management screen may provide not only current ESG diagnosis results, materiality topics, and ESG reports for the target company but also past ESG diagnosis results, materiality topics, and ESG reports, and may provide comparison functions for ESG diagnosis result trends, materiality topics, or ESG reports. Additionally, the ESG management screen may provide publicly available ESG diagnosis results, materiality topics, ESG reports, and furthermore, ESG disclosure standards for other companies. The report writer may support ESG management for the target company by providing functions through the ESG management screen to compare/review the past and present ESG management of the target company and benchmark companies.

FIG. 4 is a block diagram illustrating an ESG diagnosis system according to various embodiments of the present disclosure.

Referring to FIG. 4, the ESG diagnosis system may include an ESG diagnosis module (410), information provision module (420), visualization module (430), information collection module (440), diagnosis item DB (450), diagnosis result DB (460), benchmark DB (470), etc.

The components shown in FIG. 4 refer to components from a software perspective that are functionally implemented according to the operation of the hardware of the electronic device (110). For example, the ESG diagnosis module (410) and visualization module (430) may be implemented by the processor (113), the information provision module (420) and information collection module (440) may be implemented by the transceiver (112) and processor (113), and the diagnosis item DB (450), diagnosis result DB (460), and benchmark DB (470) may be implemented by the memory (111).

The diagnosis item DB (450) stores the ESG evaluation item pool, the diagnosis result DB (460) stores ESG diagnosis results for the target company, and the benchmark DB (470) stores companies' ESG diagnosis results, financial information, ESG disclosure information, etc.

The information collection module (440) collects ESG evaluation items and stores them in the diagnosis item DB (450), and stores benchmark companies' ESG diagnosis results, financial information, ESG disclosure information, etc. in the benchmark DB (470).

The ESG diagnosis module (410) may provide ESG evaluation items stored in the diagnosis item DB (450) to the report writer and generate ESG diagnosis results including ESG diagnosis scores based on the responses. Furthermore, the ESG diagnosis module (410) may generate ESG diagnosis score trend information based on past ESG diagnosis results stored in the diagnosis result DB (460), and generate benchmark company comparison information based on other companies' ESG diagnosis results, financial information, ESG disclosure information, etc. stored in the benchmark DB (470).

The information provision module (420) may provide the generated ESG diagnosis results to the blockchain network (130) or other devices (not shown).

The visualization module (430) may visualize ESG diagnosis results to generate charts, or graphs, etc.

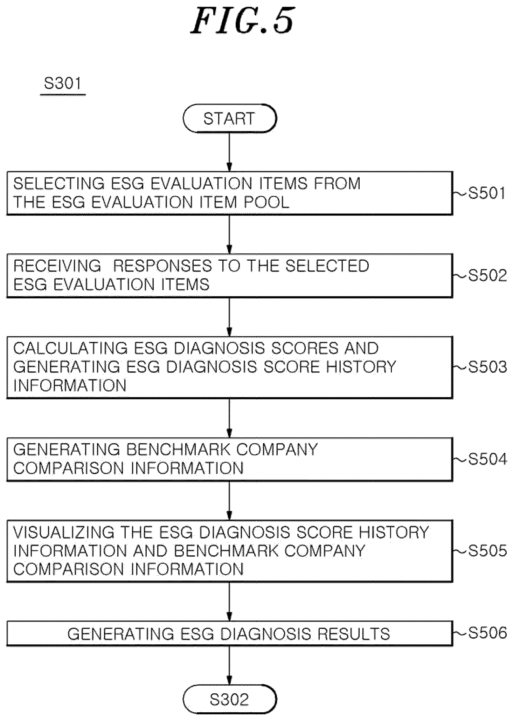

FIG. 5 is an operational flow diagram illustrating an embodiment of the step (S301) of generating ESG diagnosis results shown in FIG. 3.

Referring to FIG. 5, at step S501, the processor (113) of the electronic device (110) selects ESG evaluation items from the ESG evaluation item pool.

The processor (113) may configure ESG evaluation items by selecting a predetermined number of evaluation items for each category from among evaluation items included in the ESG evaluation item pool.

The ESG evaluation item pool may consist of evaluation items from domestic and foreign corporate evaluation agencies or evaluation items from large corporations, and the processor (113) may select a predetermined number of evaluation items for each category from among evaluation items included in the ESG evaluation item pool. For example, the processor (113) may configure ESG evaluation items by selecting evaluation items in order of frequency for each category.

Additionally, the ESG evaluation item pool may include evaluation items corresponding to supply chain companies managed by the target company through the ESG supply chain management module, and the processor (113) may configure ESG evaluation items by selecting one or more from evaluation items corresponding to supply chain companies. Specifically, target companies (for example, large corporations) above a certain size that publish ESG reports have supply chain companies they manage, and these supply chain companies may have an obligation to submit ESG reports to the target company. In this case, the target company may request ESG reports from supply chain companies in line with their desired direction, and at this time, they may select evaluation items corresponding to the supply chain company and separately publish an ESG evaluation report for the supply chain company. ESG evaluation items selected from evaluation items corresponding to supply chain companies may be used to publish the ESG evaluation report for the supply chain company.

The processor (113) may adjust the number of evaluation items for each category corresponding to the target company. The meaning of selecting evaluation items corresponding to the target company may refer to selecting evaluation items considering the target company's information such as industry, company size, sales, etc.

At step S502, the processor (113) of the electronic device (110) receives responses to the selected ESG evaluation items from the report writer who wishes to generate an ESG report.

The processor (113) may output ESG evaluation items through the output unit (115) and receive responses to the ESG evaluation items through the input unit (114).

At step S503, the processor (113) of the electronic device (110) calculates ESG diagnosis scores based on the collected responses and generates ESG diagnosis score history information.

The processor (113) may configure ESG evaluation items by selecting evaluation items corresponding to the target company from among evaluation items included in the ESG evaluation item pool, and may generate ESG diagnosis results by setting weights for each ESG evaluation item corresponding to the target company.

Weights for ESG evaluation items may be set equally for all ESG evaluation items, or may be set based on the target company's industry or size, or may be set according to surveys/interviews with the target company's stakeholders. Evaluation item weights for each evaluation item corresponding to supply chain companies may be used to generate ESG diagnosis results for supply chain companies.

Additionally, the processor (113) may generate ESG diagnosis score history information by comparing past ESG diagnosis scores for the target company with currently calculated ESG diagnosis scores. The ESG diagnosis score history may be configured to include a predetermined number (for example, 2) of recent ESG diagnosis scores and the initial ESG diagnosis score.

At step S504, the processor (113) of the electronic device (110) generates benchmark company comparison information by comparing the target company's ESG diagnosis scores with benchmark companies' ESG diagnosis scores.

The benchmark company comparison information may include at least one of the maximum, minimum, median, or average values of benchmark companies' ESG diagnosis scores, and the percentile of the target company's ESG diagnosis scores according to the distribution of benchmark companies' ESG diagnosis scores.

At step S505, the processor (113) of the electronic device (110) visualizes the ESG diagnosis score history information and benchmark company comparison information.

At step S506, the processor (113) of the electronic device (110) generates ESG diagnosis results including ESG diagnosis scores, visualized ESG diagnosis score history, and visualized benchmark company comparison information. Furthermore, the processor (113) may generate ESG diagnosis results including ESG diagnosis feedback corresponding to responses to ESG evaluation items.

Additionally, the processor (113) may generate the ESG diagnosis results as a file in a predetermined format to provide a download function or provide it to a predetermined email.

FIGS. 6 to 9 are diagrams illustrating examples of ESG diagnostic items and corresponding diagnostic feedback according to various embodiments of the present disclosure.

FIG. 6 is a diagram showing examples of ESG diagnostic items classified under the topic "Basic" and their corresponding diagnostic feedbacks according to various embodiments of the present disclosure.

FIG. 7 is a diagram showing examples of ESG diagnostic items classified under the topic "Environment" and their corresponding diagnostic feedbacks according to various embodiments of the present disclosure.

FIG. 8 is a diagram showing examples of ESG diagnostic items classified under the topic "Social" and their corresponding diagnostic feedbacks according to various embodiments of the present disclosure.

FIG. 9 is a diagram showing examples of ESG diagnostic items classified under the topic "Governance" and their corresponding diagnostic feedbacks according to various embodiments of the present disclosure.

Referring to FIGS. 6 to 9, the ESG evaluation items may consist of 3 general evaluation items, 10 environmental evaluation items, 10 social evaluation items, and 10 governance evaluation items, but the number of each item may vary.

Diagnostic feedback may be provided when the response to each evaluation item is no.

A score (for example, 10 points) may be assigned to each evaluation item, and diagnosis scores may be calculated for each category based on responses to each evaluation item. If there are weights set for each evaluation item, diagnosis scores may be calculated for each category through weighted summation.

FIG. 10 is a diagram illustrating an example of ESG diagnostic feedback according to various embodiments of the present disclosure.

Referring to FIG. 10, diagnostic feedback corresponding to the comprehensive ESG diagnosis score and ESG category-specific diagnosis scores may be provided. In FIG. 10, i-ESG refers to the ESG report generation service according to various embodiments of the present disclosure.

FIGS. 11 and 12 are diagrams illustrating examples of ESG diagnosis results according to various embodiments of the present disclosure.

FIG. 11 is a diagram displaying the assessment results by area calculated as diagnostic results of the target company according to various embodiments of the present disclosure.

FIG. 12 is a diagram displaying the detailed scores by item as diagnostic results of the target company according to various embodiments of the present disclosure.

Referring to FIGS. 11 and 12, the ESG diagnosis results may include the comprehensive ESG diagnosis score, ESG category-specific diagnosis scores, ESG diagnostic feedback based on ESG diagnosis results, ESG diagnosis score history, benchmark company comparison information, etc.

FIG. 13 is a block diagram illustrating a materiality topic selection system according to various embodiments of the present invention.

Referring to FIG. 13, the materiality topic selection system may include a materiality topic selection module (1310), information provision module (1320), visualization module (1330), priority DB (1340), ESG topic DB (1350), stakeholder DB (1360), etc.

The components shown in FIG. 13 refer to components from a software perspective that are functionally implemented according to the operation of the hardware of the electronic device (110). For example, the materiality topic selection module (1310) and visualization module (1330) may be implemented by the processor (113), the information provision module (1320) may be implemented by the transceiver (112) and processor (113), and the priority DB (1340), ESG topic DB (1350), and stakeholder DB (1360) may be implemented by the memory (111).

The priority DB (1340) stores priority information for ESG topics, the ESG topic DB (1350) stores the ESG topic pool, and the stakeholder DB (1360) stores companies' stakeholders and their contact information.

The stakeholders of the target company may be defined based on the materiality assessment method of the GRI (Global Reporting Initiative), which is a sustainability disclosure standard.

The ESG topic pool may include ESG keywords and ESG topic items directly entered by the report writer or frequently used in the same industry. These ESG keywords and ESG topic items are primarily based on materiality topics classified by industry, provided by the Sustainability Accounting Standards Board (SASB) in the United States. For example, SASB selected the keyword 'information security' as an important topic for the healthcare industry but did not select it as an important topic for the power industry.

The information collection module (440) collects ESG evaluation items and stores them in the ESG topic DB (1350), and stores companies' ESG diagnosis results, financial information, ESG disclosure information, etc. in the stakeholder DB (1360).

The materiality topic selection module (1310) may provide ESG topics stored in the ESG topic DB (1350) to the report writer to acquire priority input, provide stored ESG topics to stakeholders pre-registered in the stakeholder DB (1360) to collect priority survey results, generate priority information for ESG topics based on priority input and priority survey results, and store the generated priority information in the priority DB (1340).

The information provision module (1320) may provide ESG topics to stakeholders.

The visualization module (1330) may generate a visualized interface for selecting priorities among ESG topics for priority input or priority surveys, quantify and visualize priority survey results, generate a visualized list of ESG topics sorted based on priority information, and generate an importance comparison diagram comparing priority input and priority survey results.

FIG. 14 is an operational flow diagram illustrating an embodiment of the step (S302) of selecting materiality topics shown in FIG. 3.

Referring to FIG. 14, at step S1401, the processor (113) of the electronic device (110) selects stakeholders corresponding to the target company.

The memory (111) may store information about stakeholders corresponding to various companies and their contact information, and the processor (113) may select stakeholders corresponding to the target company from the stakeholder list. Stakeholders may include civil society, customers, executives and employees, workers, local communities, shareholders, investors, suppliers, etc.

At step S1402, the processor (113) of the electronic device (110) collects priority survey results for ESG topics from the selected stakeholders.

The processor (113) delivers ESG topics to the selected stakeholders' contact information (for example, email, mobile messenger, business chatbot) through the transceiver (112) and collects priority survey results in response. In one example, the priority survey for ESG topics delivered to stakeholders may be provided as a list interface where the order is able to be changed through interactions such as drag and drop.

The processor (113) may attempt to collect priority survey results again using the same contact method for stakeholders who did not respond, or may attempt to collect priority survey results using other registered contact methods.

ESG topics provided to stakeholders may be all ESG topics stored in the ESG topic pool, or they may be topics pre-selected by the report writer.

At step S1403, the processor (113) of the electronic device (110) obtains priority input for ESG topics from the report writer.

At step S1404, the processor (113) of the electronic device (110) selects materiality topics from among ESG topics based on priority input and priority survey results.

The processor (113) may generate priority information for ESG topics based on priority input and priority survey results, and select materiality topics based on the generated priority information.

The report writer's priority input represents the business impact on the target company, and the stakeholders' priority survey results may represent the stakeholders' interest in the target company.

At step S1405, the processor (113) of the electronic device (110) generates an importance comparison diagram comparing priority input and priority survey results.

The importance comparison diagram is a diagram that can show the visual difference in priorities that the target company and the target company's stakeholders have regarding ESG topics. For example, the x-axis of the importance comparison diagram may be an axis for priority input representing business impact, and the y-axis may be an axis for priority survey results representing stakeholders' interest.

FIGS. 15 and 16 are diagrams illustrating examples of materiality topic selection results according to various embodiments of the present disclosure.

FIG. 11 is a diagram displaying the assessment results by area calculated as diagnostic results of the target company according to various embodiments of the present disclosure.

FIG. 12 is a diagram displaying the detailed scores by item as diagnostic results of the target company according to various embodiments of the present disclosure.

Referring to FIGS. 15 and 16, the materiality topic selection results may include an importance comparison diagram and priority survey results for stakeholders.

FIG. 17 is a block diagram illustrating an ESG report generation system according to various embodiments of the present disclosure.

Referring to FIG. 17, the ESG report generation system may include a disclosure standard recommendation module (1710), ESG report generation module (1720), information collection module (1730), disclosure standard DB (1740), benchmark DB (1750), etc.

The components shown in FIG. 17 refer to components from a software perspective that are functionally implemented according to the operation of the hardware of the electronic device (110). For example, the disclosure standard recommendation module (1710) and ESG report generation module (1720) may be implemented by the processor (113), the information collection module (1730) may be implemented by the transceiver (112) and processor (113), and the disclosure standard DB (1740) and benchmark DB (1750) may be implemented by the memory (111).

The disclosure standard DB (1740) stores various disclosure standards, and the benchmark DB (1750) may store corporate information of benchmark companies, ESG disclosure standards used by benchmark companies, and ESG reports of benchmark companies. For example, the disclosure standard DB (1740) may include GRI, SASB, TCFD (Task Force on Climate-Related Financial Disclosures), UN SDGs (Sustainable Development Goals), K-ESG, etc.

The information collection module (1730) stores benchmark companies' corporate information, disclosure standards used in benchmark companies' ESG reports, and benchmark companies' ESG reports in the benchmark DB (1750).

The disclosure standard recommendation module (1710) may recommend disclosure standards suitable for the target company based on information about benchmark companies and information about the target company. Information about benchmark companies and information about the target company may include at least one of the industry group, company size, main market, disclosure target, or disclosure purpose of the benchmark companies and target company. The target company's industry group, company size, main market, disclosure target, or disclosure purpose may be entered by the report writer.

According to one embodiment, if a target company in the manufacturing industry with sales of around 100 billion won selects expansion of new transactions as the main purpose of reporting and has a history of previous disclosure, GRI may be recommended. This is because GRI is a standard that requires the most comprehensive information and targets various stakeholders. On the other hand, SASB may be recommended for an export company with sales of around 50 billion won, whose main purpose is to attract global investment. This is because SASB was created to provide information for investors' decision-making and has the characteristic of being efficient by requiring only essential information by industry. The items with the highest weight in the algorithm operation are disclosure purpose and disclosure target, followed by sales size and industry group.

The ESG report generation module (1720) provides items to be included in the ESG report based on the disclosure standard recommended by the disclosure standard recommendation module (1710) or selected by the report writer, and may generate an ESG report based on this. Additionally, the ESG report generation module (1720) may provide some of the excellent ESG reports of benchmark companies corresponding to the disclosure standard to be used in the target company's ESG report.

FIG. 18 is an operational flow diagram illustrating an embodiment of the step (S303) of generating an ESG report shown in FIG. 3.

Referring to FIG. 18, at step S1801, the processor (113) of the electronic device (110) recommends disclosure standards suitable for the target company based on information about benchmark companies and information about the target company.

The processor (113) may recommend disclosure standards by reflecting higher importance on the disclosure target and the disclosure purpose than on the importance of the industry group, the company size, and the main market.

The processor (113) may recommend one or more disclosure standards.

At step S1802, the processor (113) of the electronic device (110) generates an ESG report based on ESG diagnosis results and responses to materiality topics. This EGS report is based on the recommended disclosure standards or disclosure standards selected by the report writer.

The report writer may select disclosure standards used in generating the ESG report from among recommended disclosure standards or from non-recommended disclosure standards. In one embodiment, the processor (113) may provide excellent ESG report cases corresponding to each recommended disclosure standard when recommending disclosure standards.

Additionally, when the report writer inputs responses to selected materiality topics, the processor (113) may generate an ESG report based on those responses. The report writer inputting responses to materiality topics may mean writing content about materiality topics.

In one embodiment, the processor (113) may provide design templates for the ESG report or provide content verification options. For example, the report writer may select an ESG report cover image and layout, and may publish an ESG report in the desired style by selecting one of multiple pre-set templates. Additionally, if the report writer selects the content verification option, the processor (113) may send the generated ESG report to a pre-set third party or a third party selected by the report writer for content verification, receive content verification feedback on the ESG report, and provide this back to the report writer.

FIG. 19 is a block diagram illustrating an ESG report distribution system according to various embodiments of the present disclosure.

Referring to FIG. 19, the ESG report distribution system may include an ESG report generation module (1910), ESG report distribution module (1920), ESG report DB (1930), etc.

The components shown in FIG. 19 refer to components from a software perspective that are functionally implemented according to the operation of the hardware of the electronic device (110). For example, the ESG report generation module (1910) may be implemented by the processor (113), the ESG report distribution module (1920) may be implemented by the transceiver (112) and processor (113), and the ESG report DB (1930) may be implemented by the memory (111). The ESG report generation module (1910) shown in FIG. 19 may be identical to the ESG report generation module (1720) shown in FIG. 17.

The ESG report generation module (1910) may generate a public ESG report excluding sensitive information after generating an ESG report that includes all sensitive information about the target company. The public ESG report may be a report disclosed to everyone or a report disclosed only to registered (authorized) users, and may be called a public ESG report. The ESG report that includes all sensitive information may be called a non-public ESG report or a private ESG report, as opposed to the public ESG report.

The ESG report distribution module (1920) may distribute private ESG reports or public ESG reports. In one embodiment, the ESG report distribution module (1920) may distribute public ESG reports to a public blockchain or private blockchain. In another embodiment, the ESG report distribution module (1920) may distribute public ESG reports to a public blockchain and private ESG reports to a private blockchain.

ESG reports may be generated as files in a predetermined format (for example, pdf, etc.), and the ESG report distribution module (1920) may distribute generated ESG report files or access links to ESG report files through the blockchain network (130). Alternatively, ESG reports may be generated as web pages, and the ESG report distribution module (1920) may distribute links to generated ESG report web pages through the blockchain network (130).

The ESG report DB (1930) may store generated ESG reports (private ESG reports) and public ESG reports with sensitive information deleted. Additionally, the ESG report DB (1930) may store hash values for public ESG reports and corresponding information for the corresponding private ESG reports.

Currently, there is an increasing demand for disclosure and public announcement of ESG information, which refers to companies' non-financial information, but from the companies' perspective, concerns have been raised about the exposure of companies' sensitive information directly related to production or technology. In the case of various stakeholders who make investment decisions, evaluations, and purchase decisions based on companies' non-financial information, issues regarding the reliability of information disclosed by companies continue to be raised. Due to these issues on both sides, transparent disclosure and public announcement of ESG-related information is limited. However, this invention separately creates and distributes public ESG reports, and may provide a service that allows users to generate, distribute, and verify the authenticity of ESG reports that guarantee security and reliability through a service that combines ESG report issuance and blockchain technology to ensure information security and reliability of disclosed information.

In one embodiment, the ESG report distribution module (1920) may distribute public ESG reports through a private blockchain (for example, Hyperledger Fabric blockchain) for the information security of the report writer or the target company, thereby eliminating the risk of exposing sensitive non-financial information of the company to an unspecified number of people, and may grant access to information only to authenticated networks. The report writer grants permission for document viewing, creation, and editing only to authorized members, and if transactions such as modifications, deletions, and sharing occur, these are recorded in the ledger by blocking this information. Through this process, the document's transactions can be continuously tracked, and when publishing the final version of the ESG report later, a hash can be assigned through a hash function to publish the ESG report. The assigned hash guarantees the uniqueness of the ESG report, and if transactions such as modification, deletion, and sharing of the ESG report occur later and the ESG report is published again, the new ESG report will be assigned a different hash from the previous ESG report, allowing them to be classified as different ESG reports, thereby guaranteeing the reliability of the distributed ESG report.

The ESG report distribution module (1920) may provide the original ESG report (private ESG report) with the input hash when the hash of the published public ESG report is input, thereby guaranteeing the reliability of information disclosed by the target company from the perspective of stakeholders (for example, investors or evaluators).

In one embodiment, to distribute the generated ESG report, the ESG report distribution module (1920) establishes its own private blockchain mainnet on the infrastructure server and forms multiple (for example, up to 4) peers per node to distribute the ledger. When a transaction occurs in the blockchain network (130) formed in this way, a structure can be formed to update the ledger by the process of the private blockchain. In one embodiment, the infrastructure server may refer to the electronic device (110).

FIG. 20 is an operational flow diagram illustrating an embodiment of the step (S304) of distributing an ESG report shown in FIG. 3.

Referring to FIG. 20, at step S2001, the processor (113) of the electronic device (110) generates a public ESG report by removing sensitive information from the generated ESG report (private ESG report).

At step S2002, the processor (113) of the electronic device (110) assigns a hash to the public ESG report using a hash function.

Different hashes are assigned to each public ESG report, and each hash value corresponds to a unique public ESG report and ESG report (private ESG report), and this hash value and report correspondence relationship may be stored in the memory (111).

At step S2003, the processor (113) of the electronic device (110) distributes the public ESG report through the blockchain network (130).

FIG. 21 is a diagram illustrating the distribution process of an ESG report according to various embodiments of the present disclosure.

In FIG. 21, the report writer (2101) refers to the administrator (100_1) or user (100_2), the infrastructure server (2102) refers to the electronic device (110), the database (2103) refers to the ESG report DB (1930), and the blockchain network (2104) may refer to the blockchain network (130).

Referring to FIG. 21, the target company grants document creation authority to the report writer (2101), and the report writer (2101) creates and saves the ESG report (S2111).

The database (2103) stores the ESG report as Key values and Value values in the document storage DB according to policies, and when storage is complete, some document information is stored as the header file of a block to create a block (S2112). The created block is connected to other blocks in a chain in the blockchain network (2104) to form the blockchain network (2104) (S2113).

When an authorized user accesses an ESG report in the database (2103), all access records are stored in the access record DB (2105) (S2114). And when the update of the access record DB (2105) is confirmed, the access record is stored in a transaction of the block corresponding to the accessed ESG report (S2115).

FIG. 22 is a diagram illustrating the process of distributing an ESG report to a blockchain network according to various embodiments of the present disclosure.

In FIG. 22, the writer (2201) refers to the administrator (100_1) or user (100_2), the document DB refers to the ESG report DB (1930), the access record DB (2203) refers to the access record DB (2105), the blockchain network (2204) refers to the blockchain network (130), and the administrator (2205) may refer to the administrator (100_1).

Referring to FIG. 22, the authenticated user, writer (2201), creates a document (S2211) and stores the document in the document DB (2202). And the document DB (2202) delivers the writer (2201) and document information of the stored document to the access record DB (2203). The delivered the writer (2201) and document information is stored.

After storing the document, it detects the storage action in the access record DB (2203) and executes the chain code (S2213), and creates a block with document information as the header file according to the development content of the executed chain code (S2214). At this time, a blockchain is formed within the mainnet and the blockchain network (2204) is established.

The writer (2201) with document modification authority can modify or delete documents stored in the document DB (2202) (S2215), and through this, delivers the information of the writer (2201) who accessed the document to the access record DB (2203) for storage (S2216). These steps (S2215, S2216) can provide security stability for sensitive corporate information by utilizing the characteristics of Hyperledger Fabric that enable user tracking. The process achieves this by granting document access authority exclusively to authenticated users like the writer (2201) while maintaining comprehensive access logs for accountability.

It executes the chain code by checking the changes to the access record DB (2203) (S2217) and updates the blockchain information as a transaction occurring in the modified document block (S2218).

The administrator (2205) who has the authority to finalize the created document can view information in the access record DB (2203) (S2219). Through this process, a continuous blockchain is formed and data changes are made impossible, thus making effective ledger proof of reports possible.

When embodiments of the present disclosure are implemented using hardware, application-specific integrated circuits (ASICs), digital signal processors (DSPs), digital signal processing devices (DSPDs), programmable logic devices (PLDs), field programmable gate arrays (FPGAs), or the like configured to perform the embodiments of the present disclosure may be provided among components of the present disclosure.

Meanwhile, the methods described above can be written as programs executable on a computer and implemented on a general-purpose digital computer by operating the program using a computer-readable medium. Additionally, the data structures used in the above methods can be recorded on a computer-readable storage medium through various means. Program storage devices used to describe storage devices containing executable computer code for performing various methods of the present disclosure should not be understood to include transitory objects such as carrier waves or signals. The computer-readable storage medium includes storage media such as magnetic storage media (for example, ROM, floppy disks, hard disks, etc.) and optical reading media (for example, CD-ROM, DVD, etc.).

The embodiments described above are combinations of the components and features of the present disclosure in certain forms. Each component or feature should be considered optional unless explicitly stated otherwise. Each component or feature may be practiced without being combined with other components or features. Also, it is possible to constitute embodiments of the present disclosure by combining some components and/or features. The order of operations described in the embodiments of the invention may be changed. Some configuration or feature of one embodiment may be included in another embodiment, or may be replaced by a corresponding configuration or feature of another embodiment. It is apparent that claims that do not have explicit citation relationships in the patent claims may be combined to constitute embodiments or included as new claims by post-filing amendments.

It will be apparent to those skilled in the art to which the present disclosure pertains that the present disclosure may be embodied in other forms without departing from the technical idea and essential characteristics of the present disclosure. Therefore, the above embodiments should be considered exemplary, not limiting, in all respects. The scope of the present disclosure should be determined by a reasonable interpretation of the appended claims and all possible changes within the equivalent scope of the present disclosure.

## Claims

1. (Currently Amended) An ESG (Environment, Social, Governance) management device (100),
wherein the device (100) comprises:
an ESG diagnosis module (410) configured to generate ESG diagnosis results for a target company based on a plurality of ESG evaluation items including environmental evaluation items, social evaluation items, governance evaluation items, and general evaluation items;
a materiality topic selection module (1310) configured to select materiality topics corresponding to the target company from among ESG topics included in an ESG topic pool;
an ESG report generation module (1720) configured to generate an ESG report based on the ESG diagnosis results and responses to the materiality topics; and
an ESG management support module configured to provide an ESG management screen including at least one of the ESG diagnosis results, the materiality topics, and the ESG report,
**characterised in that**
the ESG diagnosis module (410) is configured to select the ESG evaluation items from an ESG evaluation item pool that compiles evaluation items from domestic and international corporate evaluation agencies or evaluation items by category from large cooperations,
wherein the ESG evaluation items are selected in order of highest frequency for each category and the ESG evaluation items of the ESG evaluation item pool are continuously updated, and
wherein the ESG management device (100) further includes an ESG supply chain management module that stores information on supply chain companies managed by the target company, and configures the ESG evaluation items by selecting one or more from among evaluation items corresponding to the supply chain companies,
wherein the materiality topic selection module collects priority survey results for the ESG topic from pre-registered stakeholders, and selects the materiality topics based on the priority survey results and a report writer's priority input for the ESG topics,
wherein the materiality topic selection module provides topics pre-selected by the report writer from among the ESG topics to the pre-registered stakeholders, and collects the priority survey results for the selected topics from the stakeholders, and
wherein the ESG report generation module (1720) generates the ESG report including a importance comparison diagram that compares the priority input and the priority survey results, and
wherein an x-axis of the importance comparison diagram is an axis for the priority input representing business impact, and a y-axis of the importance comparison diagram is an axis for the priority survey results representing stakeholders' interest.

2. (Currently Amended) The device (100) of claim 1, wherein the ESG diagnosis module (410) sets evaluation item weights for each of the evaluation items corresponding to the supply chain companies, and generates ESG diagnosis results for the supply chain companies by reflecting the evaluation item weights.

3. (Currently Amended) The device (100) of any one of the preceding claims, wherein the ESG report generation module (1720) generates the ESG report including at least one of an ESG comprehensive diagnosis score, ESG category-specific diagnosis scores, ESG diagnosis feedback based on the ESG diagnosis results, ESG diagnosis score history, or benchmark company comparison information.

4. (Currently Amended) The device (100) of any one of the preceding claims, further comprising:
a disclosure standard recommendation module (1710) configured to recommend disclosure standards corresponding to the target company based on at least one of the target company's industry group, company size, primary markets, disclosure targets, or disclosure purposes,
wherein the ESG report generation module (1720) generates the ESG report based on the recommended disclosure standards or disclosure standards selected by the report writer.

5. (Currently Amended) The device (100) of any one of the preceding claims, wherein the disclosure standard recommendation module (1710) recommends the disclosure standards by applying higher importance to the disclosure targets and disclosure purposes than to the importance of the industry group, company size, and primary markets.

6. (Currently Amended) The device (100) of any one of the preceding claims, further comprising:
an ESG report distribution module (1920) configured to publish the ESG report through at least one of public blockchain or private blockchain.

7. (Currently Amended) The device (100) of any one of the preceding claims,
wherein the ESG report generation module (1720) generates a public ESG report by excluding sensitive information from the ESG report, and the ESG report distribution module distributes the public ESG report through a private blockchain that only authorized users can access.

8. (Currently Amended) The device (100) of any one of the preceding claims,
wherein the ESG report distribution module (1920) provides the ESG report corresponding to the public ESG report when a hash corresponding to the public ESG report is input.

9. (Currently Amended) A computer-implemented ESG (Environment, Social, Governance) management method, performed by an ESG (Environment, Social, Governance) management device,
wherein the method comprises:
generating ESG diagnosis results for a target company based on a plurality of ESG evaluation items including environmental evaluation items, social evaluation items, governance evaluation items, and general evaluation items;
selecting materiality topics corresponding to the target company from among ESG topics included in an ESG topic pool;
generating an ESG report based on the ESG diagnosis results and responses to the materiality topics; and
providing an ESG management screen including at least one of the ESG diagnosis results, the materiality topics, or the ESG report,
**characterised in that**
the generating ESG diagnosis results includes selecting the ESG evaluation items from an ESG evaluation item pool that compiles evaluation items from domestic and international corporate evaluation agencies or evaluation items by category from large corporations,
wherein the ESG evaluation items are selected in order of highest frequency for each category and the ESG evaluation items of the ESG evaluation item pool are continuously updated,
wherein the method further comprises storing information on supply chain companies managed by the target company and configuring the ESG evaluation items by selecting one or more from evaluation items corresponding to the supply chain companies,
wherein the selecting materiality topics includes collecting priority survey results for the ESG topics from pre-registered stakeholders, and selecting the materiality topics based on the priority survey results and a report writer's priority input for the ESG topics,
wherein the selecting materiality topics further includes providing topics pre-selected by the report writer from among the ESG topics to the pre-registered stakeholders, and collecting the priority survey results for the selected topics from the stakeholders, and
wherein the generating the ESG report includes generating the ESG report including an importance comparison diagram that compares the priority input and the priority survey results,
wherein an x-axis of the importance comparison diagram is an axis for the priority input representing business impact, and a y-axis of the importance comparison diagram is an axis for the priority survey results representing stakeholders' interest.

## Patentansprüche

1. ESG- (Environment, Social, Governance) Management-Vorrichtung (100),
wobei die Vorrichtung (100) umfasst:
ein ESG-Diagnosemodul (410), das konfiguriert ist, um ESG-Diagnoseergebnisse für ein Zielunternehmen auf der Grundlage einer Vielzahl von ESG-Bewertungskriterien zu generieren, einschließlich Umwelt-Bewertungskriterien, soziale Bewertungskriterien, Unternehmensführungs-Bewertungskriterien und allgemeine Bewertungskriterien;
ein Modul (1310) zur Auswahl von Wesentlichkeitsthemen, das konfiguriert ist, um aus in einem ESG-Themenpool enthaltenen ESG-Themen Wesentlichkeitsthemen auszuwählen, die dem Zielunternehmen entsprechen;
ein ESG-Berichtserstellungs-Modul (1720), das konfiguriert ist, um auf der Grundlage der ESG-Diagnoseergebnisse und der Antworten auf die Wesentlichkeitsthemen einen ESG-Bericht zu erstellen; und
ein Unterstützungsmodul für das ESG-Management, das konfiguriert ist, um einen ESG-Management-Bildschirm bereitzustellen, der zumindest eines der ESG-Diagnoseergebnisse, der Wesentlichkeitsthemen und den ESG-Bericht enthält,
**dadurch gekennzeichnet,**
**dass** das ESG-Diagnosemodul (410) konfiguriert ist, um die ESG-Bewertungskriterien aus einem ESG-Bewertungskriterien-Pool auszuwählen, in dem Bewertungskriterien von inländischen und internationalen Unternehmensbewertungsagenturen oder Bewertungskriterien nach Kategorien von Großunternehmen zusammengefasst sind,
wobei die Auswahl der ESG-Bewertungskriterien für jede Kategorie in der Reihenfolge ihrer höchsten Häufigkeit erfolgt und die ESG-Bewertungskriterien des ESG-Bewertungskriterien-Pools kontinuierlich aktualisiert werden, und
wobei die ESG-Management-Vorrichtung (100) des Weiteren ein Modul zum ESG-Lieferketten-Management beinhaltet, in dem Informationen über die vom Zielunternehmen verwalteten Lieferkettenunternehmen gespeichert sind und das die ESG-Bewertungskriterien konfiguriert, indem es eines oder mehrere Bewertungskriterien auswählt, das bzw. die den Unternehmen der Lieferkette entsprechen,
wobei das Modul zur Auswahl der Wesentlichkeitsthemen Prioritätsumfrageergebnisse für das ESG-Thema von vorregistrierten Stakeholdern sammelt, und die Wesentlichkeitsthemen auf der Grundlage der Prioritätenumfrageergebnisse und der vom Berichtsverfasser als vorrangig eingestuften ESG-Themen auswählt,
wobei das Modul zur Auswahl der Wesentlichkeitsthemen den vorregistrierten Stakeholdern vom Berichtersteller vorausgewählte Themen aus den ESG-Themen zur Verfügung stellt und die Prioritätsumfrageergebnisse für die ausgewählten Themen von den Stakeholdern erfasst, und
wobei das ESG-Berichtserstellungs-Modul (1720) den ESG-Bericht einschließlich eines Diagramms zum Vergleich der Wichtigkeit erstellt, das die Prioritäteneingaben den Ergebnissen der Prioritätenumfrage gegenüberstellt, und
wobei die x-Achse des Diagramms zum Vergleich der Wichtigkeit eine Achse für die Prioritätseingaben ist, die die geschäftlichen Auswirkungen widerspiegeln, und die y-Achse des Diagramms zum Vergleich der Wichtigkeit eine Achse für die Ergebnisse der Prioritätenumfrage ist,
die das Interesse der Stakeholder widerspiegeln.

2. Vorrichtung (100) nach Anspruch 1, bei der das ESG-Diagnosemodul (410) für jedes der Bewertungskriterien, die den Unternehmen der Lieferkette entsprechen, Gewichtungen festlegt und ESG-Diagnoseergebnisse für die Unternehmen der Lieferkette unter Berücksichtigung der Gewichtungen der Bewertungskriterien erstellt.

3. Vorrichtung (100) nach einem der vorstehenden Ansprüche, bei der das ESG-Berichterstellungs-Modul (1720) den ESG-Bericht erstellt, der zumindest eines der folgenden Elemente enthält: einen umfassenden ESG-Diagnosewert, ESG-kategorienspezifische Diagnosewerte, ESG-Diagnose-Feedback auf der Grundlage der ESG-Diagnoseergebnisse, den Verlauf der ESG-Diagnosewerte oder Informationen zum Unternehmensvergleich mit Bestleistungen.

4. Vorrichtung (100) nach einem der vorstehenden Ansprüche, des Weiteren umfassend:
ein Modul (1710) zur Empfehlung von Offenlegungsstandards, das konfiguriert ist, um Offenlegungsstandards zu empfehlen, die dem Zielunternehmen entsprechen, auf der Grundlage zumindest einem der folgenden Kriterien: Branchenzugehörigkeit des Zielunternehmens, Unternehmensgröße, Hauptmärkte, Offenlegungsziele oder Offenlegungszwecke,
wobei das ESG-Berichterstellungs-Modul (1720) den ESG-Bericht auf der Grundlage der empfohlenen Offenlegungsstandards oder der vom Berichtverfasser ausgewählten Offenlegungsstandards erstellt.

5. Vorrichtung (100) nach einem der vorstehenden Ansprüche, bei der das Modul (1710) zur Empfehlung von Offenlegungsstandards die Offenlegungsstandards empfiehlt, indem es den Offenlegungszielen und Offenlegungszwecken eine höhere Bedeutung beimisst als der Branchenzugehörigkeit, der Unternehmensgröße und den Hauptmärkten.

6. Vorrichtung (100) nach einem der vorstehenden Ansprüche, des Weiteren umfassend:
ein Modul (1920) zur Verteilung von ESG-Berichten, das konfiguriert ist, um den ESG-Bericht über zumindest eine öffentliche oder private Blockchain zu veröffentlichen.

7. Vorrichtung (100) nach einem der vorstehenden Ansprüche, bei der das ESG-Berichterstellungs-Modul (1720) einen öffentlichen ESG-Bericht erstellt, indem sensible Informationen aus dem ESG-Bericht ausgeschlossen werden, und das Modul zur Verteilung von ESG-Berichten den öffentlichen ESG-Bericht über eine private Blockchain verteilt, auf die nur autorisierte Benutzer Zugriff haben.

8. Vorrichtung (100) nach einem der vorstehenden Ansprüche, bei der das Modul (1920) zur Verteilung von ESG-Berichten den dem öffentlichen ESG-Bericht entsprechenden ESG-Bericht bereitstellt, wenn ein dem öffentlichen ESG-Bericht entsprechender Hash-Wert eingegeben wird.

9. Computerimplementiertes ESG- (Environment, Social, Governance) Management-Verfahren, das von einer ESG- (Environment, Social, Governance) Management-Vorrichtung ausgeführt wird,
wobei das Verfahren umfasst:
Erstellen von ESG-Diagnoseergebnissen für ein Zielunternehmen auf der Grundlage einer Vielzahl von ESG-Bewertungskriterien, einschließlich Umwelt-Bewertungskriterien, sozialer Bewertungskriterien, Unternehmensführungs-Bewertungskriterien und allgemeiner Bewertungskriterien;
Auswählen von Wesentlichkeitsthemen, die dem Zielunternehmen entsprechen, aus einer Reihe von in einem ESG-Themenpool enthaltenen ESG-Themen;
Erstellen eines ESG-Berichts auf der Grundlage der ESG-Diagnoseergebnisse und der Antworten auf die Wesentlichkeitsthemen; und
Bereitstellen eines ESG-Management-Bildschirms, der zumindest eines der folgenden Elemente enthält: die ESG-Diagnoseergebnisse, die Wesentlichkeitsthemen oder den ESG-Bericht,
**dadurch gekennzeichnet,**
**dass** das Erstellen der ESG-Diagnoseergebnisse das Auswählen der ESG-Bewertungskriterien aus einem ESG-Bewertungskriterien-Pool umfasst, in dem Bewertungskriterien von inländischen und internationalen Unternehmensbewertungsagenturen oder Bewertungskriterien nach Kategorien von Großunternehmen zusammenfasst sind,
wobei das Auswählen der ESG-Bewertungskriterien für jede Kategorie in der Reihenfolge der höchsten Häufigkeit erfolgt und die ESG-Bewertungskriterien des ESG-Bewertungskriterien-Pools kontinuierlich aktualisiert werden,
wobei das Verfahren des Weiteren das Speichern von Informationen über von dem Zielunternehmen verwaltete Unternehmen der Lieferkette und das Konfigurieren der ESG-Bewertungskriterien durch Auswahl eines oder mehrerer aus den Bewertungskriterien, die den Unternehmen der Lieferkette entsprechen, umfasst,
wobei das Auswählen der Wesentlichkeitsthemen das Erfassen von Ergebnissen einer Prioritätenumfrage zu den ESG-Themen von vorregistrierten Stakeholdern umfasst, sowie das Auswählen der Wesentlichkeitsthemen auf der Grundlage der Prioritätenumfrageergebnisse und
der vom Berichtsverfasser als vorrangig eingestuften ESG-Themen,
wobei das Auswählen der Wesentlichkeitsthemen des Weiteren das Bereitstellen von Themen, die vom Berichtsverfasser aus den ESG-Themen vorausgewählt wurden, an die vorregistrierten Stakeholder sowie das Einholen der Ergebnisse der Prioritätenumfrage zu den ausgewählten Themen von den Stakeholdern umfasst, und
wobei das Erstellen des ESG-Berichts das Erstellen des ESG-Berichts umfasst, der ein Diagramm zum Wichtigkeitsvergleich enthält, in dem die eingegebenen Prioritäten und die Ergebnisse der Prioritätenumfrage gegenübergestellt werden,
wobei die x-Achse des Diagramms zum Wichtigkeitsvergleich eine Achse für die Prioritätseingaben ist, die die geschäftlichen Auswirkungen widerspiegeln, und die y-Achse des Diagramms zum Wichtigkeitsvergleich eine Achse für die Ergebnisse der Prioritätenumfrage ist, die das Interesse der Stakeholder widerspiegeln.

## Revendications

1. Dispositif (100) de gestion ESG (Environnement, Social, Gouvernance),
dans lequel le dispositif (100) comprend :
un module de diagnostic ESG (410) configuré pour générer des résultats de diagnostic ESG pour une société cible sur la base d'une pluralité d'éléments d'évaluation ESG comportant des éléments d'évaluation environnementale, des éléments d'évaluation sociale, des éléments d'évaluation de gouvernance et des éléments d'évaluation générale ;
un module de sélection de sujets de matérialité (1310) configuré pour sélectionner des sujets de matérialité correspondant à la société cible parmi des sujets ESG inclus dans une réserve de sujets ESG ;
un module de génération de rapports ESG (1720) configuré pour générer un rapport ESG selon les résultats de diagnostic ESG et des réponses aux sujets de matérialité ; et
un module de prise en charge de gestion ESG configuré pour fournir un écran de gestion ESG comportant les résultats de diagnostic ESG, les sujets de matérialité et/ou le rapport ESG,
**caractérisé en ce que**
le module de diagnostic ESG (410) est configuré pour sélectionner les éléments d'évaluation ESG dans une réserve d'éléments d'évaluation ESG qui rassemble des éléments d'évaluation provenant d'agences d'évaluation d'entreprises nationales et internationales ou des éléments d'évaluation par catégorie provenant de grandes entreprises,
dans lequel les éléments d'évaluation ESG sont sélectionnés par ordre de la plus haute fréquence pour chaque catégorie, et les éléments d'évaluation ESG de la réserve d'éléments d'évaluation ESG sont mis à jour en continu, et
dans lequel le dispositif (100) de gestion ESG comporte en outre un module de gestion de chaîne d'approvisionnement ESG qui stocke des informations sur des sociétés de chaîne d'approvisionnement gérées par la société cible et qui configure les éléments d'évaluation ESG en sélectionnant un ou plusieurs éléments d'évaluation correspondant aux sociétés de chaîne d'approvisionnement,
dans lequel le module de sélection de sujets de matérialité recueille des résultats d'enquête prioritaire pour le sujet ESG auprès de parties prenantes pré-enregistrées et sélectionne les sujets de matérialité selon les résultats d'enquête prioritaire et une priorité de rédacteur de rapport d'entrée pour les sujets ESG,
dans lequel le module de sélection de sujets de matérialité fournit des sujets présélectionnés par le rédacteur de rapport parmi les sujets ESG aux parties prenantes pré-enregistrées et recueille les résultats d'enquête prioritaire pour les sujets sélectionnés auprès des parties prenantes, et
dans lequel le module de génération de rapports ESG (1720) génère le rapport ESG comportant un diagramme de comparaison d'importance qui compare la priorité d'entrée et les résultats d'enquête prioritaire, et
dans lequel un axe x du diagramme de comparaison d'importance est un axe pour la priorité d'entrée représentant les répercussions sur les activités, et un axe y du diagramme de comparaison d'importance est un axe des résultats d'enquête prioritaire représentant l'intérêt des parties prenantes.

2. Dispositif (100) selon la revendication 1, dans lequel le module de diagnostic ESG (410) définit des poids d'éléments d'évaluation pour chacun des éléments d'évaluation correspondant aux sociétés de chaîne d'approvisionnement, et génère des résultats de diagnostic ESG pour les sociétés de chaîne d'approvisionnement en tenant compte des poids d'éléments d'évaluation.

3. Dispositif (100) selon l'une quelconque des revendications précédentes, dans lequel le module de génération de rapports ESG (1720) génère le rapport ESG comportant un score de diagnostic ESG global, des scores de diagnostic ESG spécifiques à une catégorie, une rétroaction de diagnostics ESG basée sur les résultats de diagnostic ESG, un historique de score de diagnostic ESG et/ou des informations de comparaison de société de référence.

4. Dispositif (100) selon l'une quelconque des revendications précédentes, comprenant en outre :
un module de recommandation de normes de divulgation (1710) configuré pour recommander des normes de divulgation correspondant à la société cible en se basant au moins sur un groupe industriel, une taille de société, les marchés principaux, des cibles de divulgation et/ou des objectifs de divulgation de la société cible,
dans lequel le module de génération de rapports ESG (1720) génère le rapport ESG sur la base des normes de divulgation recommandées ou des normes de divulgation sélectionnées par le rédacteur de rapport.

5. Dispositif (100) selon l'une quelconque des revendications précédentes, dans lequel le module de recommandation de normes de divulgation (1710) recommande les normes de divulgation en appliquant une plus grande importance aux cibles de divulgation et aux objectifs de divulgation qu'à l'importance du groupe industriel, de la taille de société et des marchés principaux.

6. Dispositif (100) selon l'une quelconque des revendications précédentes, comprenant en outre :
un module de distribution de rapports ESG (1920) configuré pour publier le rapport ESG via au moins une parmi une chaîne de blocs publique ou une chaîne de blocs privée.

7. Dispositif (100) selon l'une quelconque des revendications précédentes,
dans lequel le module de génération de rapports ESG (1720) génère un rapport ESG public en excluant des informations sensibles du rapport ESG, et le module de distribution de rapports ESG distribue le rapport ESG public via une chaîne de blocs privée à laquelle seuls les utilisateurs autorisés ont accès.

8. Dispositif (100) selon l'une quelconque des revendications précédentes,
dans lequel le module de distribution de rapports ESG (1920) fournit le rapport ESG correspondant au rapport ESG public lorsqu'un hachage correspondant au rapport ESG public est entré.

9. Procédé informatique de gestion ESG (Environnement, Social, Gouvernance) mis en œuvre par un dispositif de gestion ESG (Environnement, Social, Gouvernance),
dans lequel le procédé comprend les étapes suivantes :
générer des résultats de diagnostic ESG pour une société cible sur la base d'une pluralité d'éléments d'évaluation ESG comportant des éléments d'évaluation environnementale, des éléments d'évaluation sociale, des éléments d'évaluation de gouvernance et des éléments d'évaluation générale ;
sélectionner des sujets de matérialité correspondant à la société cible parmi des sujets ESG inclus dans une réserve de sujets ESG ;
générer un rapport ESG selon les résultats de diagnostic ESG et des réponses aux sujets de matérialité ; et
fournir un écran de gestion ESG comportant les résultats de diagnostic ESG, les sujets de matérialité et/ou le rapport ESG,
**caractérisé en ce que**
la génération de résultats de diagnostic ESG comporte la sélection des éléments d'évaluation ESG dans une réserve d'éléments d'évaluation ESG qui rassemble des éléments d'évaluation provenant d'agences d'évaluation d'entreprises nationales et internationales ou des éléments d'évaluation par catégorie provenant de grandes entreprises,
dans lequel les éléments d'évaluation ESG sont sélectionnés par ordre de la plus haute fréquence pour chaque catégorie, et les éléments d'évaluation ESG de la réserve d'éléments d'évaluation ESG sont mis à jour en continu,
dans lequel le procédé comprend en outre le stockage d'informations sur des sociétés de chaîne d'approvisionnement gérées par la société cible et la configuration des éléments d'évaluation ESG en sélectionnant un ou plusieurs éléments d'évaluation correspondant aux sociétés de chaîne d'approvisionnement,
dans lequel la sélection de sujets de matérialité comporte la collecte de résultats d'enquête prioritaire pour les sujets ESG auprès de parties prenantes pré-enregistrées, et la sélection des sujets de matérialité selon les résultats d'enquête prioritaire et une priorité de rédacteur de rapport d'entrée pour les sujets ESG,
dans lequel la sélection de sujets de matérialité comporte en outre la fourniture de sujets présélectionnés par le rédacteur de rapport parmi les sujets ESG aux parties prenantes pré-enregistrées et la collecte des résultats d'enquête prioritaire pour les sujets sélectionnés auprès des parties prenantes, et
dans lequel la génération du rapport ESG comporte la génération du rapport ESG comportant un diagramme de comparaison d'importance qui compare la priorité d'entrée et les résultats d'enquête prioritaire,
dans lequel un axe x du diagramme de comparaison d'importance est un axe pour la priorité d'entrée représentant les répercussions sur les activités, et un axe y du diagramme de comparaison d'importance est un axe des résultats d'enquête prioritaire représentant l'intérêt des parties prenantes.
